# EUROPÄISCHE PATENTANMELDUNG

(11) **EP 2 216 167 A2**
(43) Veröffentlichungstag der Anmeldung: **11.08.2010**
(21) Anmeldenummer: 10001173.3
(22) Anmeldetag: 05.02.2010
(51) Int. Cl.: B31B 19/90

(54) **Verfahren und Vorrichtung zur Herstellung von Beuteln**

(30) Priorität: 09.02.2009 DE 102009008129
(71) Anmelder: Focke & Co. (GmbH & Co.), 27283 Verden (DE)
(72) Erfinder: Dose, Thomas, 25524 Itzehoe (DE); Storcks, Andreas, 22089 Hamburg (DE); Geske, Hagen, 27356 Rotenburg (DE)
(74) Vertreter: Aulich, Martin

(57) **Zusammenfassung**

Die Erfindung betrifft ein Verfahren zum Herstellen von Beuteln (30) aus Folie (44) oder dergleichen für Schüttgüter oder faseriges Material, vorzugsweise für Tabak (31), wobei eine fortlaufende Folienbahn (44) und/oder mindestens eine weitere fortlaufende Materialbahn (41) entlang wenigstens einer Schweißstation (45, 46, 47, 104) geführt werden, an der Abschnitte der Folie (33a) (und/oder des mindestens einen weiteren Materials (41) verschweißt werden, bevorzugt mit anderen Abschnitten der Folie (34a) und/oder mit dem weiteren Material (41), insbesondere mit Teilen eines mehrfach wirkenden Verschlussmittels (41). Bei diesem Verfahren werden die Folienbahn (44) und/oder die mindestens eine weitere Materialbahn (41) insbesondere taktweise wenigstens annähernd in Vertikalrichtung entlang der mindestens einen Schweißstation (45, 46, 47, 104) geführt und/oder die fortlaufende Folienbahn (44) und/oder die mindestens eine weitere Materialbahn (41), insbesondere taktweise, durch UltraschallSchweißen verschweißt.

## Beschreibung

Die vorliegende Erfindung betrifft ein Verfahren zum Herstellen von Beuteln aus Folie oder dergleichen für Schüttgüter oder faseriges Material, vorzugsweise für Tabak, wobei eine fortlaufende Folienbahn und/oder mindestens eine weitere fortlaufende Materialbahn entlang wenigstens einer Schweißstation geführt werden, an der Abschnitte der Folie und/oder des mindestens einen weiteren Materials verschweißt werden, bevorzugt mit anderen Abschnitten der Folie und/oder mit dem weiteren Material, insbesondere mit Teilen eines mehrfach wirkenden Verschlussmittels. Die Erfindung betrifft weiter eine Vorrichtung zur Durchführung des Verfahrens. Die Erfindung betrifft des Weiteren eine Vorrichtung zum Schweißen, die insbesondere im Zusammenhang mit dem vorgenannten Herstellverfahren eingesetzt werden kann.

Die Erfindung befasst sich vornehmlich mit der Herstellung von Beutelpackungen für geschnittenen Tabak. Ein solcher Beutel besteht aus einer in der Regel thermisch verschweißbaren bzw. siegelbaren Folie, die gegebenenfalls mehrlagig oder mehrschichtig ausgebildet ist. Im Rahmen der Herstellung werden in der Regel Abschnitte der Folie mittels Wärmeheizbacken miteinander verschweißt. Es ist bekannt, derartige Beutel mit Druckverschlüssen zu versehen, etwa Zip-Locks®. Diese mehrfach wirkenden Verschlussmittel werden bei der Herstellung ebenfalls thermisch mit der Folie verschweißt.

Die bisherigen Herstellungsverfahren haben mehrere Nachteile. Zum einen erfordert das thermische Verschweißen der Folie und/oder der Druckverschlüsse vergleichsweise viel Zeit, was zu hohen Taktzeiten der Maschine führt. Weiter dehnen sich die zu verschweißenden Materialien unter der Wärmeeinbringung aus. Dies gilt insbesondere für Schweißvorgänge, die unmittelbar die Folie betreffen. Weiter verläuft die Folie im Stand der Technik während der Schweißvorgänge horizontal. Trotz geeigneter Vorspannung der Folie hängt diese dann schwerkraftbedingt häufig nach unten durch, nämlich in Richtung der unterhalb der Folie angeordneten Schweißbacken. Insbesondere bei nachlassender Beschichtung der Schweißbacken bleibt die Folie dann an den Schweißbacken haften. Hierdurch wird gegebenenfalls die Folienbedruckung zerstört.

Es ist Aufgabe der vorliegenden Erfindung, das Herstellungsverfahren von Beutelpackungen im Hinblick auf eine möglichst problemlose Fertigung zu verbessern.

Diese Aufgabe wird gelöst durch ein Verfahren mit den Merkmalen des Anspruches 1 sowie eine Vorrichtung mit den Merkmalen des Anspruches 11.

Das erfindungsgemäße Verfahren bzw. die erfindungsgemäße Vorrichtung zeichnet sich gemäß einer ersten Alternative dadurch aus, dass die Folienbahn und/oder die mindestens eine weitere Materialbahn insbesondere taktweise wenigstens annähernd in Vertikalrichtung entlang der mindestens einen Schweißstation geführt werden. Das Führen der Folienbahn und/oder der Materialbahn in senkrechter Stellung, während die Schweißvorgänge erfolgen, verhindert in optimaler Weise problematische Einflüsse der Schwerkraft auf die Beutelherstellung. Ein Durchhängen der Folie nach unten - wie dies bei der horizontalen Förderung der Folie im Stand der Technik der Fall ist - wird wirksam verhindert.

Zusätzlich oder alternativ kann die Herstellung der Beutel wirksam verbessert werden, indem mindestens eine Schweißstation als Ultraschall-Schweißstation ausgebildet ist. Das Ultraschall-Schweißen birgt im vorliegenden Fall gegenüber thermischen Schweißverfahren eine Vielzahl von Vorteilen. So kann die zeitliche Dauer der einzelnen Schweißprozesse gegenüber thermischen Schweißvorgängen deutlich verringert werden. Weiter werden die durch Wärmeeinbringung erzeugten Dehnungen der Folie und/oder des weiteren Materials vermieden.

Gemäß einer bevorzugten Ausführungsform der Erfindung weißt die oder jede Schweißstation Schweißbacken auf, insbesondere Ultraschallsonotroden, die jeweils in einer horizontalen Ebene an mindestens eines der zu verschweißenden Materialien heranbewegt werden, sodass die Schweißbacken während des eigentlichen Schweißvorgangs insbesondere unter Druckbeaufschlagung an dem jeweiligen Material anliegen.

Gemäß einer weiteren bevorzugten Ausführungsform der Erfindung sind mindestens zwei, vorzugsweise drei und/oder sämtliche Schweißstationen in einer gemeinsamen vertikalen Ebene in Folienbahnförderrichtung aufeinanderfolgend, vorzugsweise untereinander, angeordnet.

Gemäß einer weiteren bevorzugten Ausführungsform der Erfindung wird bevorzugt an einer ersten Schweißstation als Verschlussmittel ein mehrfach wirkender Druckverschluss an der Folienbahn befestigt wird, vorzugsweise durch Ultraschallschweißen.

Gemäß einer weiteren bevorzugten Ausführungsform der Erfindung werden insbesondere an einer zweiten Schweißstation, die vorzugsweise stromab der ersten Schweißstation angeordnet ist, einzelne Abschnitte von Profilstreifen des Druckverschlusses miteinander verschmolzen bzw. verschweißt, bevorzugt durch Ultraschallschweißen.

Gemäß einer weiteren bevorzugten Ausführungsform der Erfindung werden insbesondere an einer dritten Schweißstation, die vorzugsweise stromab der zweiten Schweißstation angeordnet ist, einzelne Abschnitte der Folie unter Bildung von sich im Wesentlichen quer zur Förderrichtung der Folienbahn erstreckenden Quernähten miteinander verschweißt, vorzugsweise durch Ultraschallschweißen.

Gemäß einer weiteren bevorzugten Ausführungsform der Erfindung erfolgt sowohl das Verschmelzen bzw. Verschweißen der einzelnen Abschnitte der Profilstreifen als auch der einzelnen Abschnitte der Folie zur Bildung der Quernähte an ein und derselben Schweißstation, wobei die jeweiligen Schweißvorgänge bevorzugt zeitgleich erfolgen.

Gemäß einer weiteren bevorzugten Ausführungsform der Erfindung wird die Folienbahn ohne Umlenkung zwischen den Schweißstationen geradlinig in wenigstens annähernd vertikaler Richtung entlang von mindestens zwei, vorzugsweise entlang sämtlicher Schweißstationen geführt.

Gemäß einer weiteren bevorzugten Ausführungsform der Erfindung weist der Druckverschluss zwei miteinander lösbar verbindbare Profilstreifen auf, die als fortlaufende Profilstreifen in miteinander verbundenem Zustand, nämlich dem geschlossenen Zustand des Druckverschlusses, in den Förderweg der Folienbahn eingefördert werden, die nachfolgend getrennt werden - geöffneter Zustand des Druckverschlusses -, und die nachfolgend in dem getrennten Zustand jeweils einzeln mit der Folie verschweißt werden.

Gemäß einer weiteren bevorzugten Ausführungsform der Erfindung wird der Druckverschluss zur Trennung der verbundenen Profilstreifen zu einer Trennweiche gefördert, die den Druckverschluss in die beiden Profilstreifen trennt, wobei vorzugsweise die beiden Profilstreifen nach der Trennung und vor dem Verschweißen derselben entlang der Trennweiche weitergefördert werden.

Gemäß einer weiteren bevorzugten Ausführungsform der Erfindung weist die Trennweiche zu beiden Seiten Anlageflächen auf, an denen die getrennten Profilstreifen während des Schweißvorgangs anliegen, wobei die Schweißbacken der Schweißstation gegenüberliegend zu den Anlageflächen angeordnet sind.

Gemäß einer weiteren bevorzugten Ausführungsform der Erfindung sind die Profilstreifen während des Schweißvorgangs jeweils in einer Nut innerhalb der jeweiligen Anlageflächen positioniert.

Gemäß einer weiteren bevorzugten Ausführungsform der Erfindung wird die Position der fortlaufenden Folienbahn und/oder des Druckverschlusses mittels eines geeigneten Sensors erfasst, insbesondere mittels eines Druckmarkenlesers, wobei die Position der Folienbahn relativ zu den Schweißbacken mindestens einer Schweißstation abhängig von den von dem Sensor erfassten Messwerten gesteuert und/oder geregelt wird.

Gemäß einer weiteren bevorzugten Ausführungsform der Erfindung weist der Druckverschluss zwei miteinander lösbar verbindbare Profilstreifen auf, die als fortlaufende Profilstreifen in miteinander verbundenem Zustand, nämlich dem geschlossenen Zustand des Druckverschlusses, in den Förderweg der Folienbahn eingefördert werden, und die nachfolgend in dem miteinander verbundenen Zustand jeweils mit der Folie verschweißt werden.

Gemäß einer weiteren bevorzugten Ausführungsform der Erfindung weisen die sich im geschlossenen Zustand des Druckverschlusses gegenüber liegenden Profilstreifen jeweils mindestens einen mit der Folie zu verschweißenden Trägerstreifen auf, der jeweils während des Schweißvorgangs mindestens bereichsweise an in mindestens einem Zwischenraum zwischen den Trägerstreifen angeordneten Anlagemitteln anliegt, wobei die dem Zwischenraum / den Zwischenräumen zugewandten Seiten des jeweiligen Trägerstreifens dabei mindestens bereichsweise an dem jeweiligen Anlagemittel anliegen.

Gemäß einer weiteren bevorzugten Ausführungsform der Erfindung sind mindestens zwei Schweißbacken, insbesondere Ultraschallsonotroden, in einer horizontalen Ebene gegenüberliegend angeordnet, wobei die Schweißbacken insbesondere während des Schweißvorgangs bezogen auf eine zwischen den Schweißbacken verlaufende, vertikale Mittelebene gleichförmig aufeinander zu- bzw. voneinander weg bewegt werden, und wobei diese Bewegungen mittels einer geeigneten Synchronisationseinrichtung miteinander synchronisiert werden.

Eine erfindungsgemäße Vorrichtung zur Lösung der Aufgabe weist die Merkmale des Anspruches 11 auf. Demnach wird eine Vorrichtung zum Herstellen von Beuteln aus Folie oder dergleichen für Schüttgüter oder faseriges Material, vorzugsweise für Tabak, angegeben mit einer Fördereinrichtung, mit der eine fortlaufende Folienbahn und/oder eine weitere fortlaufende Materialbahn entlang wenigstens einer Schweißstation der Vorrichtung führbar ist, wobei die Schweißstation derart ausgebildet ist, dass an dieser Abschnitte der Folie und/oder des mindestens einen weiteren Materials verschweißbar sind, bevorzugt mit anderen Abschnitten der Folie und/oder mit dem weiteren Material, insbesondere mit Teilen eines mehrfach wirkenden Verschlussmittels, und wobei die Fördereinrichtung und die Schweißstation derart ausgebildet und angeordnet sind, dass die Folienbahn entlang der mindestens einen Schweißstation wenigstens annähernd in Vertikalrichtung führbar ist und/oder wobei die Schweißstation als Ultraschall-Schweißstation ausgebildet ist.

Gemäß einer weiteren bevorzugten Ausführungsform der Erfindung umfasst die Fördereinrichtung mindestens ein Fördermittel, vorzugsweise eine Förderrolle, mit mindestens einer Förderfläche, die über wenigstens eine Nut verfügt, in der ein oder mehrere fortlaufende Profilstreifen eines als Druckverschluss ausgebildeten Verschlussmittels führbar sind.

Gemäß einer weiteren bevorzugten Ausführungsform der Erfindung weist die Schweißstation Schweißbacken, insbesondere Ultraschallsonotroden auf, die derart angeordnet sind, dass sie in einer wenigstens annähernd horizontalen Ebene bewegbar sind, insbesondere angetrieben von einem motorischen Antrieb, etwa einem hydraulischem oder pneumatischen Antrieb.

Gemäß einer weiteren bevorzugten Ausführungsform der Erfindung sind mindestens zwei, vorzugsweise drei und/oder sämtliche Schweißstationen in einer gemeinsamen vertikalen Ebene in Folienbahnförderrichtung stromab aufeinanderfolgend, vorzugsweise untereinander, angeordnet.

Gemäß einer weiteren bevorzugten Ausführungsform der Erfindung verfügt mindestens eine Schweißstation über mehrere, stromab aufeinanderfolgende, insbesondere in einer Vertikalebene untereinander angeordnete Schweißaggregate mit jeweils mindestens einer Schweißbacke, insbesondere Ultraschallsonotrode, wobei die Schweißaggregate der Schweißstation an einem gemeinsamen Rahmen oder Rahmengestell, vorzugsweise an einem geschlossenen Rahmen/Rahmengestell, angeordnet sind.

Gemäß einer weiteren bevorzugten Ausführungsform der Erfindung verfügt mindestens eine Schweißstation über mehrere, insbesondere in der Vertikalebene untereinander angeordnete Schweißaggregatepaare mit jeweils mindestens einer Schweißbacke, wobei die Schweißaggregate eines Schweißaggregatepaares bezogen auf die Förderbewegung der Folienbahn an einer gemeinsamen Förderposition und in Bezug auf eine Mittelebene zwischen den Schweißaggregaten aneinander gegenüberliegend positioniert sind, insbesondere in einer gemeinsamen horizontalen Ebene.

Gemäß einer weiteren bevorzugten Ausführungsform der Erfindung sind die vertikalen Positionen der Schweißbacken, insbesondere der Ultraschallsonotroden bzw. der Schweißaggregate insbesondere relativ zueinander mittels mindestens eines Stellantriebs einstellbar, insbesondere mittels einer gemeinsamen, jeweils mit den Schweißaggregaten wirkverbundenen, motorisch oder händisch antreibbaren Spindel.

Gemäß einer weiteren bevorzugten Ausführungsform der Erfindung verfügt der Spindelantrieb über mindestens zwei Abschnitte mit unterschiedlichen Gewindesteigungen, wobei mindestens ein erstes Schweißaggregat mit dem Abschnitt der kleineren Gewindesteigung wirkverbunden ist und mindestens ein weiteres Schweißaggregat mit dem Abschnitt der größeren Gewindesteigung.

Gemäß einer weiteren bevorzugten Ausführungsform der Erfindung sind die Schweißaggregate der Schweißstation zur Führung derselben während der vertikalen Verstellbewegungen der Aggregate innerhalb einer vorzugsweise gemeinsamen, insbesondere vertikal verlaufenden Nut des gemeinsamen Rahmens oder Rahmengestells geführt.

Weitere auch eigenständig beanspruchbare Merkmale und Vorteile der Erfindung ergeben sich aus den beigefügten Patentansprüchen, der nachfolgenden Beschreibung bevorzugter Ausführungsbeispiele der Erfindung sowie aus den beigefügten Zeichnungen. Darin zeigen:
- Fig. 1: einen Teilabschnitt eines nach dem erfindungsgemäßen Verfahren arbeitenden Beutelpackers in schematischer Seitenansicht,
- Fig. 2: einen Teilausschnitt der Darstellung aus Fig. 1 in perspektivischer Schrägansicht, nämlich eine erste Schweißstation des Beutelpackers,
- Fig. 3: einen weiteren Teilausschnitt der Darstellung aus Fig. 1 in nochmals vereinfachter Perspektivdarstellung, nämlich eine zweite Schweißstation,
- Fig. 4: ein weiterer Teilausschnitt der Darstellung aus Fig. 1 in vereinfachter Perspektivansicht, nämlich eine dritte Schweißstation,
- Fig. 5: einen einzelnen erfindungsgemäß hergestellten Tabakbeutel in Schrägansicht,
- Fig. 6: die erste Schweißstation aus Fig. 1 in schematischer Seitenansicht,
- Fig. 7: eine Schnittansicht der Schweißstation aus Fig. 6 entlang der Schnittlinie I-I in Fig. 6,
- Fig. 8: eine Einzelheit der Schweißstation aus Fig. 7, nämlich einen Teil eines Synchronantriebs,
- Fig. 9: eine Schnittdarstellung der ersten Schweißstation aus Fig. 6 entlang der Schnittlinie II-II in Fig. 6,
- Fig. 10: einen Schnitt entlang der Schnittlinie IV-IV in Fig. 9,
- Fig. 11: einen Schnitt entlang der Schnittlinie V-V in Fig. 10,
- Fig. 12: die Einzelheit III aus Fig. 7,
- Fig. 13: eine alternative Ausführungsform der ersten Schweißstation aus Fig. 6 in einer Schnittansicht analog zu der Schnittlinie V-V in Fig. 9,
- Fig. 14: einen Schnitt entlang der Schnittlinie VI-VI aus Fig. 13,
- Fig. 15: einen Schnitt entlang der Schnittlinie VII-VII aus Fig. 13,
- Fig. 16: einen Schnitt entlang der Schnittlinie VIII-VIII aus Fig. 13,
- Fig. 17: die zweite Schweißstation aus Fig. 1 in schematischer Seitenansicht,
- Fig. 18: einen Schnitt durch die zweite Schweißstation entlang der Schnittlinie IX-IX aus Fig. 17,
- Fig. 19: die dritte Schweißstation aus Fig. 1 in schematischer Seitenansicht,
- Fig. 20: einen Schnitt durch die dritte Schweißstation entlang der Schnittlinie X-X in Fig. 19,
- Fig. 21: die dritte Schweißstation in der Darstellung gemäß Fig. 19 mit veränderter Anlageeinrichtung,
- Fig. 22: die dritte Schweißstation in der Darstellung gemäß Fig. 19 mit verschobener Zugstrebe,
- Fig. 23: eine weitere Ausführungsform der Erfindung in schematischer Seitenansicht, in der gegenüber der Ausführungsform aus Fig. 1 die zweite und dritte Schweißstation funktional in einer Station vereint sind,
- Fig. 24: die vereinte Schweißstation aus Fig. 23 in Seitenansicht,
- Fig. 25: einen Schnitt durch die Schweißstation aus Fig. 23 entlang der Schnittlinie XI-XI in Fig. 24.

Die dargestellten Ausführungsbeispiele betreffen die Herstellung von Beuteln 30 aus Folie, nämlich von Tabakbeuteln. In einem solchen Beutel 30 werden ein oder mehrere Tabakportionen 31 als Beutelinhalt eingefüllt. Der Beutel 30 besteht aus dünnem Verpackungsmaterial, insbesondere einer mit Ultraschall und/oder Wärme siegelbaren bzw. schweißbaren Folie. Ein Zuschnitt zur Bildung eines Beutels ist unter Bildung einer Bodenkante 32 derart gefaltet, dass eine Vorderwand 33 und eine Rückwand 34 aneinander liegen bzw. den Beutel 30 zur Aufnahme der Tabakportion bilden. Im Bereich seitlicher Ränder sind die Vorderwand 33 und die Rückwand 34 dauerhaft miteinander verbunden, nämlich verschweißt, und zwar durch aufrechte Seitennähte 36a, 36b. Die Rückwand 34 des Beutels 30 ist mit einer Verlängerung bzw. Fortsetzung versehen zur Bildung einer Umschlagslasche 37. Bei geschlossenem Beutel 30 ist die Umschlagslasche 37 gegen die Vorderwand 33 umgelegt und mit dieser lösbar verbunden, zum Beispiel mittels eines Klebestreifens 38.

Der Beutel 30 weist eine Füllöffnung 39 auf. Diese erstreckt sich quer zum Beutel 30 und ist durch Vorderwand 33 und Rückwand 34 begrenzt. Sie befindet sich an einer oberen Längsnaht 40 des Beutels 30 bzw. der Vorderwand 33.

Die Füllöffnung 39 ist zugleich eine Entnahmeöffnung. Nach Befüllung des Beutels 30 mit der Tabakportion 31 wird die Füll- und/oder Entnahmeöffnung 39 durch ein mehrfach wirkendes Verschlussmittel 41 geschlossen. Das mehrfach wirkende Verschlussmittel 41 kann demnach später im Gebrauch von einem Verwender zunächst geöffnet und nach Entnahme von Teilportionen wieder geschlossen werden.

Als mehrfach wirkendes Verschlussmittel 41 ist im Bereich der Füll- bzw. Entnahmeöffnung 39 ein Druckverschluss positioniert. Der Druckverschluss 41 ist im vorliegenden Fall ein sogenannter Zip-Lock®.

Das Verschlussmittel 41 verfügt über zwei im geschlossenen Zustand des Verschlussmittels 41 miteinander verbundene Profilstreifen 42, 43. Durch Auseinanderziehen derselben können diese zur Öffnung des Verschlussmittels 41 voneinander getrennt werden. Um die Profilstreifen 42, 43 später wieder miteinander zu verbinden bzw. um das Verschlussmittel 41 später wieder zu verschließen, werden die Profilstreifen 42, 43 aneinandergelegt und mit seitlichem Druck beaufschlagt.

Jeder Profilstreifen 42, 43 verfügt zu diesem Zweck über einen Trägerstreifen 42a bzw. 43a und jeweils an mit diesem vorzugsweise einstückig verbundene Verbindungsprofile 42b bzw. 43b. Die Profilstreifen 42, 43 sind aus einem mittels Ultraschall verschweißbarem Material gebildet. Sie sind in nachfolgend noch näher erläuterter Weise durch Verschweißen mit der Vorderwand 33 und der Rückwand 34 verbunden. Die Verbindung ist derart, dass die Verbindungsprofile 42b, 43b der jeweiligen Profilstreifen 42, 43 unterhalb der Füll- und/oder Entnahmeöffnung 39 liegen.

In der Stellung, in der die Profilstreifen 42, 43 miteinander verbunden sind, also die Füll- und/oder Entnahmeöffnung 39 geschlossen ist, treten die rippenartig ausgebildeten Verbindungsprofile 42b, 43b wechselseitig formschlüssig ineinander und bilden so eine wirksame, leicht zu öffnende Verbindung über die volle Erstreckung der Füll- und/oder Entnahmeöffnung 39.

In besonderer Weise erfolgt die Herstellung der Beutel 30 mittels eines erfindungsgemäß ausgebildeten Beutelpackers. Nachfolgend sind verschiedene Stationen des Beutelpackers dargestellt, in denen insbesondere das Schweißen der Nähte der Beutel 30 erfolgt, die Verbindung der Profilstreifen 42, 43 mit der Vorderwand 33 bzw. Rückwand 34 sowie das Verschmelzen von Enden der Profilstreifen 42, 43 des Beutels 30. Andere Stationen dagegen, die erfindungsgemäß nicht relevant sind, unter anderem das Trennen einer fortlaufenden Folienbahn in die einzelnen Beutel 30, das Anbringen der Klebestreifen 38 an die Beutel 30, das Befüllen der Beutel 30 mit den Tabakportionen 31, sind aus Vereinfachungsgründen weggelassen worden.

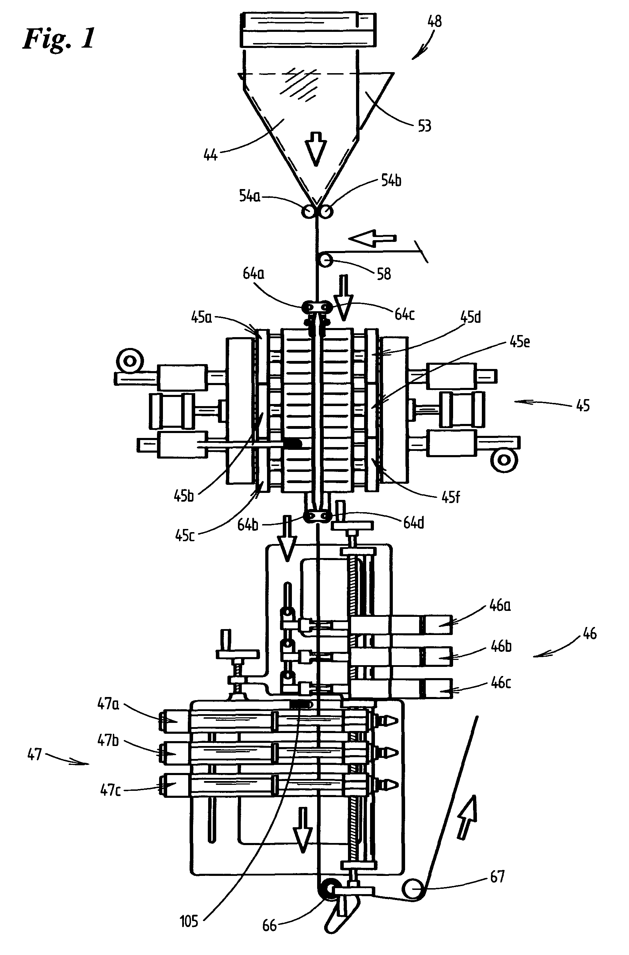

Gemäß einer ersten Ausführungsform des erfindungsgemäßen Verfahrens und der erfindungsgemäßen Vorrichtung wird eine fortlaufende, erste Materialbahn 44, nämlich eine Folienbahn, in Vertikalrichtung von oben nach unten taktweise entlang dreier aufeinander folgender Schweißstationen 45, 46, 47 gefördert, vgl. Fig. 1. Parallel zu der ersten Materialbahn 44 wird zumindest abschnittsweise eine zweite Materialbahn geführt, nämlich das als fortlaufende Materialbahn ausgebildete Verschlussmittel 41.

Zur Förderung der Materialbahnen 41, 44 sind verschiedene Rollen und Walzen vorgesehen, insbesondere Umlenkrollen 58, 67, eine motorisch angetriebene Vorzugswalzen 66, sowie Führungswalzen 64a, 64b, 64c, 64d. Diese einzelnen Förderorgane werden nachfolgend noch genauer beschrieben.

Die Materialbahnen 41, 44 werden durch die Förderorgane taktweise in diskreten Zeitabständen jeweils um einen bestimmten Förderabschnitt in Förderrichtung weitergefördert. Hierzu wird die Vorzugswalze 66 mittels einer nicht dargestellten, zentralen Steuerungs- und/oder Regelungseinrichtung der Vorrichtung bzw. des Beutelpackers in geeigneter Weise gesteuert. Die Vorzugswalze 66 ist dabei stromab der letzten, nämlich der dritten Schweißstation 47 angeordnet.

Die Steuerung derselben erfolgt abhängig von von einem Druckmarkenleser 105 erfassten Druckmarken auf der Materialbahn 41. Der Druckmarkenleser 105 ist zu diesem Zweck zwischen der zweiten und dritten Schweißstation 46 bzw. 47 angeordnet.

Zwischen den taktweisen Förderbewegungen ruhen die Materialbahnen 41, 44. In diesen Stillstandsphasen werden einzelne Schweißvorgänge an den ortsfesten Schweißstationen 45, 46, 47 durchgeführt.

Grundsätzlich ist alternativ zu der obigen Vorgehensweise natürlich auch denkbar, die Schweißvorgänge während kontinuierlicher Förderbewegungen der Materialbahnen 41, 44 vorzunehmen.

Jede der Schweißstationen 45, 46, 47 verfügt über einzelne Schweißaggregate 45a-45f, 46a-46c bzw. 47a-47c. Jeweils drei einzelne Schweißaggregate 45a-45c, 45d-45f, 46a-46c sowie 47a-47c sind in Förderrichtung (Pfeilrichtung in Fig. 1) jeweils aufeinanderfolgend nacheinander angeordnet. Im vorliegenden Fall sind sie untereinander positioniert.

Sämtliche Schweißaggregate 45a-...-47c der drei Schweißstationen führen dabei taktweise horizontale Hin- und/oder Herbewegungen auf die Materialbahnen 41, 44 zu bzw. von diesen weg aus. Dabei werden die Schweißaggregate 45a-...-47c zwischen einer von der Schweißstellung beabstandeten Position und der eigentlichen Schweißstellung taktweise hin- und/oder herbewegt.

Die erfindungsgemäße vertikale Ausrichtung der Materialbahnen 41, 44, insbesondere im Bereich der Schweißstation 45, 46, 47, birgt im Gegensatz zu einer horizontalen Ausrichtung den Vorteil, dass ein schwerkraftbedingtes Durchhängen derselben vermieden wird.

Dementsprechend ist insbesondere die Gefahr reduziert, dass die Folienbahn 44 durch das Durchhängen ungewollt an den Schweißaggregaten 45a-...-47c haften bleibt und während der Hin- und/oder Herbewegungen des jeweiligen Schweißaggregates 45a-...-47c fehlerhafterweise mitgeführt wird.

In später noch näher beschriebener Weise werden an der ersten Schweißstation 45 die einzelnen fortlaufenden Profilstreifen 42, 43 der fortlaufenden Verschlussmittelbahn 41 angebracht.

An der zweiten Schweißstation 46 werden in den späteren, fertiggestellten Beuteln 30 sich gegenüberliegende Endabschnitte 49-52 der Profilstreifen 42, 43 miteinander verschmolzen ("gecrasht").

An der dritten Siegelstation 47 werden Quernähte 35 hergestellt. Später wird die fortlaufende Folienbahn 44 in die Einzelbeutel 30 getrennt, indem - nicht gezeigt - mittig durch diese Quernähte 35 Trennschnitte erfolgen. Die durch die Trennschnitte entstehenden Quernahtstreifen bilden dann jeweils die die Vorder- und Rückwand 33, 34 der fertiggestellten Beutel 30 verbindenden Seitennähte 36a bzw. 36b.

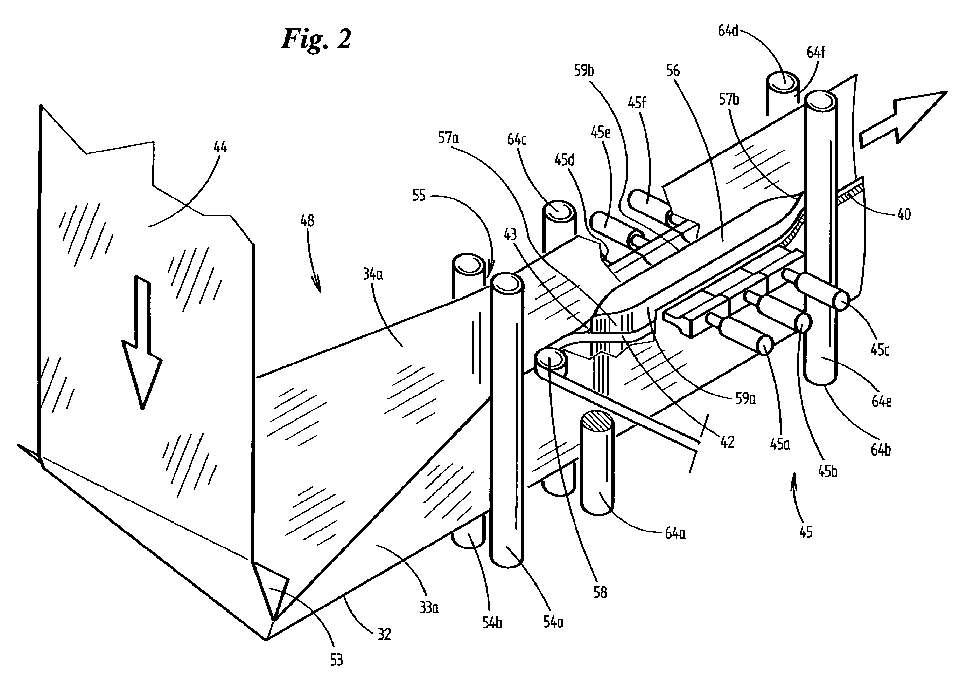

Bevor die fortlaufende Folienbahn 44 der ersten Schweißstation 45 zugeführt wird, wird die zunächst in einer Ebene geführte Bahn 44 unter Ausbildung der (fortlaufenden) Bodenkante 32 der späteren Beutel 30 mittels einer Falteinrichtung 48 gefaltet (Fig. 2).

Die Falteinrichtung 48 umfasst ein Faltdreieck 53 sowie stromab von diesem zwei mit Abstand zueinander angeordnete Führungsrollen 54a, 54b mit parallelen, senkrecht zur Förderrichtung der Folienbahn 44 verlaufenden Drehachsen, die einen Führungsspalt 55 einschließen. Durch diesen Führungsspalt 55 hindurch verläuft die Folienbahn 44 in bereits umgefaltetem Zustand.

Aus dem in Fig. 2 gezeigten, ausgehend von der Bodenkante 32 vorderen Bereich 33a der fortlaufenden Folienbahn 44 wird die Vorderwand 33 der späteren Beutel 30 gebildet. Aus dem ausgehend von der Bodenkante 32 winklig zu dem vorderen Bereich 33a verlaufenden, hinteren Bereich 34a der Folienbahn 44 werden die Rückwand 34 sowie die Umschlagslasche 37 der späteren Beutel 30 gebildet.

Bezogen auf die Förderrichtung der Materialbahnen 41, 44 stromauf der ersten Schweißstation 45, im vorliegenden Fall unmittelbar vor dieser, wird die fortlaufende Verschlussmittelbahn 41 in den Förderweg der Folienbahn 44 eingefördert.

Im vorliegenden Ausführungsbeispiel wird die Verschlussmittelbahn 41 zu diesem Zweck aus einer Richtung winklig, insbesondere quer zur Förderrichtung der Folienbahn 44 in den Förderweg derselben eingefördert. Genauer gesagt wird die Verschlussmittelbahn 41 von der dem vorderen Folienbereich 33a benachbarten Seite aus derart in den Förderweg eingefördert, dass die Verschlussmittelbahn 41 nach der Einförderung zunächst in einer vertikalen Ebene zwischen dem vorderen und dem hinteren Folienbahnbereich 33a, 34a verläuft.

Zu diesem Zweck ist im Bereich des Förderwegs versetzt zu der Längsoberkante des vorderen Folienbahnbereichs 33a eine Umlenkrolle 58 angeordnet, die die Verschlussmittelbahn 41 in die (vertikale) Förderrichtung der Folienbahn 44 umlenkt. Die Umlenkrolle 58 ist dabei im Bereich des Förderwegs der Folienbahn 44 in einem größeren Abstand zu der Bodenkante 32 der Folienbahn 44 angeordnet als die Längsoberkante des vorderen Folienbahnbereichs 33a der Folienbahn 44. In Fig. 2 ist die Umlenkrolle 58 daher oberhalb der Längsoberkante des vorderen Bereichs 33a der Folienbahn 44 positioniert.

Folienbahn 44 und Verschlussmittelbahn 41 werden im Anschluss an die Einförderung der Verschlussmittelbahn 41 in den Förderweg der Folienbahn 41 gemeinsam weitergefördert durch zwei sich gegenüberliegende, stromauf der Schweißaggregate 45a-45f angeordneten Führungswalzen 64a, 64c. Die Rotationsbewegungen der um parallele Achsen rotierenden Führungswalzen 64a, 64c sind dabei synchronisiert. Die Folienbahn 44 und der Verschlussmittelbahn 41 werden mittels leichtem Anpressdruck zwischen den Führungswalzen 64a, 64c weiterbewegt.

Die Verschlussmittelbahn 41 bzw. das Verschlussmittel 41 befindet sich während der beschriebenen Förderung zwischen dem Walzenpaar 64a, 64c noch in geschlossenem Zustand. Demnach sind die Profilstreifen 42, 43 in der bereits weiter oben beschriebenen Weise miteinander verbunden.

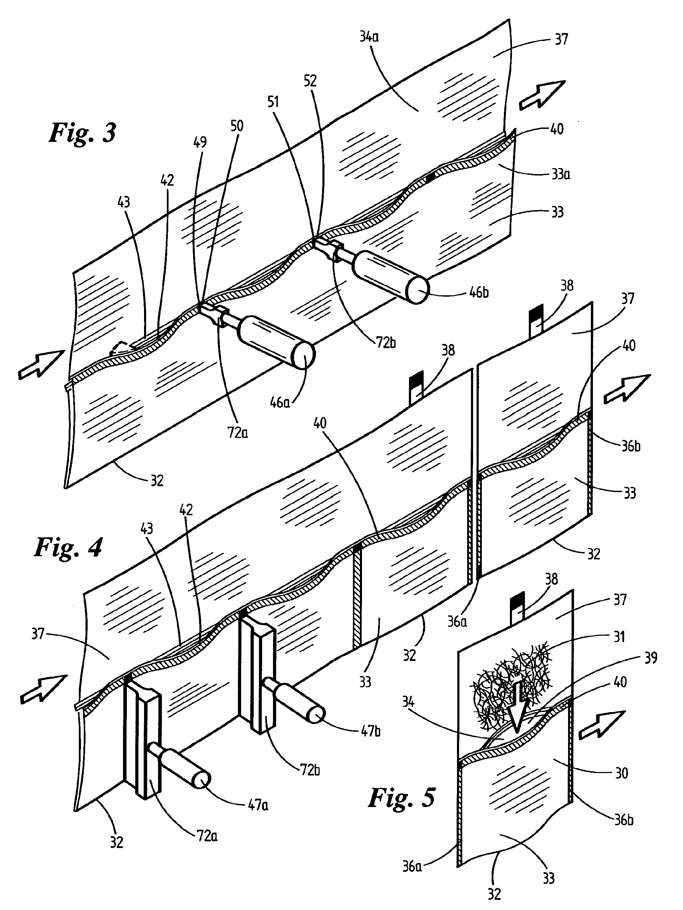

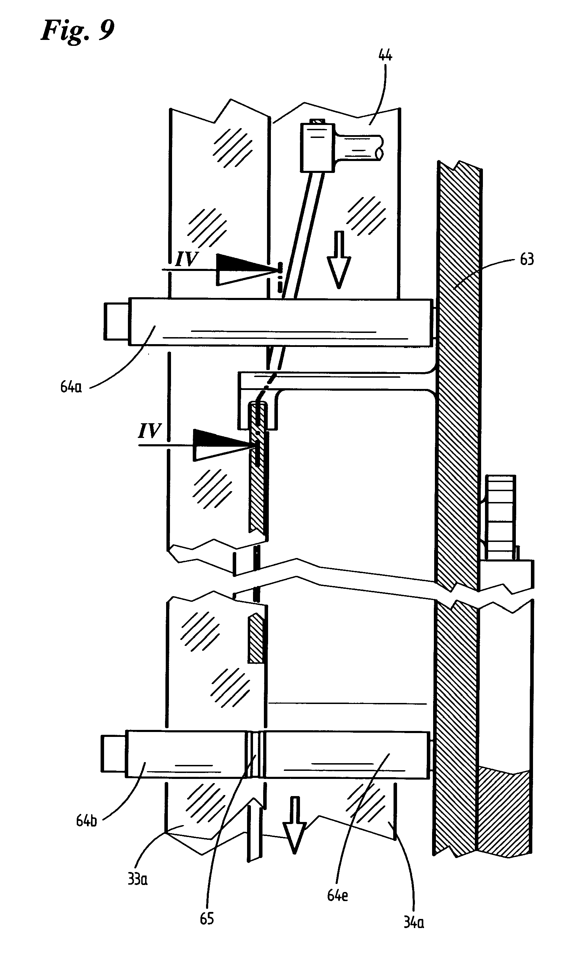

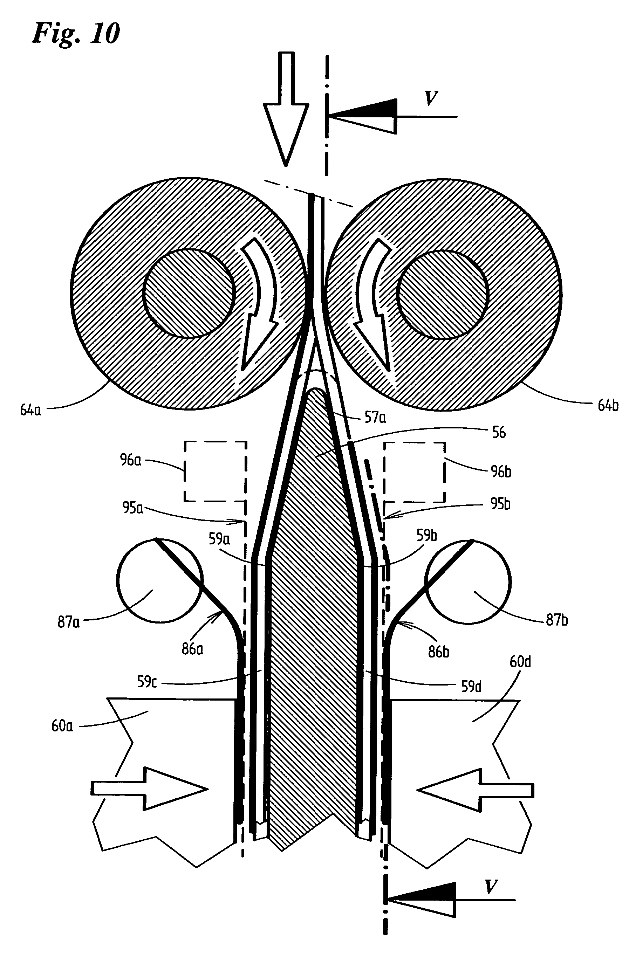

Zur Vorbereitung des nachfolgenden Schweißvorgangs an der Schweißstation 45 werden die Profilstreifen 42, 43 in einer ersten Ausführungsform der Erfindung (Fig. 1-12) voneinander getrennt. Zu diesem Zweck werden sie entlang einer in dem Förderweg angeordneten Trennweiche 56 gefördert, die unmittelbar stromab an das Führungswalzenpaar 64a, 64c angrenzt.

Die Trennweiche 56 verfügt über ein Trennmittel 57a, nämlich ein keilartig zulaufendes freies Ende der Trennweiche 56. Das Trennmittel 57a greift etwa mittig zwischen den miteinander verbundenen Profilstreifen 42, 43 an und spaltet diese in die einzelnen Streifen 42, 43 auf.

Die Trennweiche 56 weist eine insgesamt längliche Kontur auf. Stromab des freien Endes 57a verfügt die Trennweiche 56 an zwei gegenüberliegenden Längsseiten über in der vertikalen Förderebene verlaufende, seitliche Anlageflächen 59a, 59b. Der vordere Folienbahnbereich 33a wird gemeinsam mit dem Profilstreifen 42 entlang der in Fig. 2 vorderen Anlagefläche 59a gefördert, der hintere Folienbahnbereich 34a zusammen mit dem Profilstreifen 43 entlang der hinteren Anlagefläche 59b.

Genauer gesagt werden die Profilstreifen 42, 43 entlang von in den Anlageflächen 59a, 59b eingelassenen Führungsnuten 59c, 59d geführt. Diese verlaufen ausgehend von in der Vertikalebene verlaufenden Seiten des keilartigen, freien Endes 57a entlang der seitlichen Anlageflächen 59a, 59b der Trennweiche 56 bis zu einem weiteren keilartigen, freien Ende 57b der Trennweiche 56.

Für das Verschweißen der Profilstreifen 42, 43 müssen diese zunächst in eine bestimmte Stellung relativ zu der Vorderwand 33 bzw. Rückwand 34 des späteren Beutels 30 gefördert werden. Der Profilstreifen 42 muss parallel zu der Längsoberkante der späteren Vorderwand 33 verlaufen, und zwar etwas unterhalb derselben. Der Profilstreifen 43 muss auf gleicher Höhe entsprechend auf der gegenüberliegenden Seite der Rückwand 34 positioniert werden.

Da die Verschlussmittelbahn 41 zunächst seitlich versetzt zu der Vorderwand 33 bzw. zu dem vorderen Folienbahnbereich 33, aus dem die Vorderwand 33 gebildet wird, in den Förderweg eingefördert worden ist - in Fig. 2 also oberhalb der Längsoberkante der Vorderwand 33 -, müssen die Verschlussmittelbahn 41 bzw. die getrennten Profilstreifen 42, 43 vor dem Schweißen zunächst etwas nach unten, d.h. in Richtung der Bodenkante 32 umgeleitet werden. Mit anderen Worten müssen die jeweiligen Abstände der Profilstreifen 42, 43 zu der Bodenkante 32 verringert werden.

Zu diesem Zweck weisen die Führungsnuten 59c, 59d der Trennweiche 56 jeweils einen ersten, in Richtung der Bodenkante 32 geneigten Abschnitt A auf, durch den der jeweilige Profilstreifen 42, 43 in Richtung der Bodenkante 32 gelenkt wird.

An diesen ersten Abschnitt A der jeweiligen Führungsnut 59c, 59d schließt sich stromab ein zweiter, parallel zur Bodenkante 32 verlaufender Abschnitt B an.

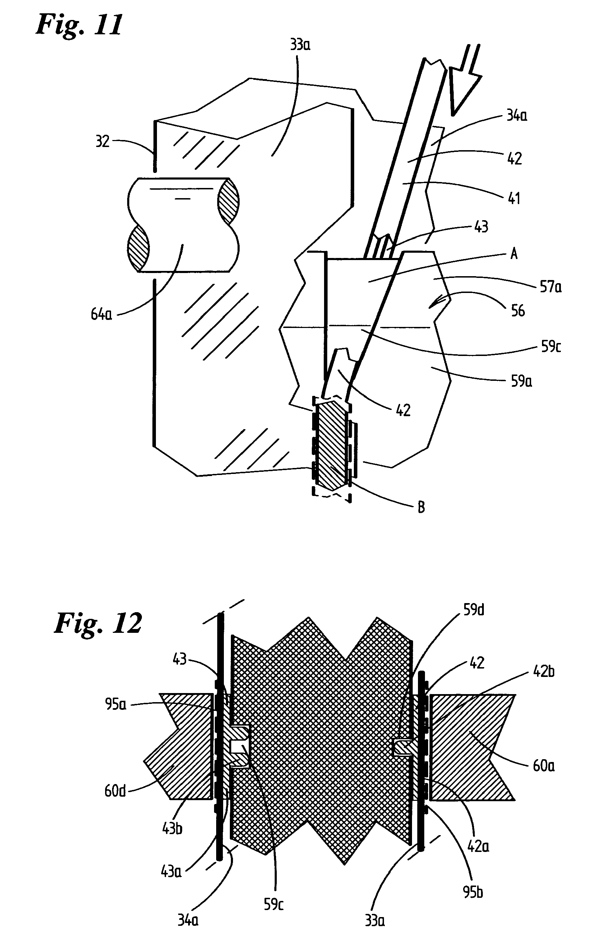

Die Abschnitte A, B der Führungsnuten 59c, 59d verlaufen mit anderen Worten derart, dass die Profilstreifen 42, 43 jeweils parallel zu der Verschlussmittel-Ausgangsbahn in einem Abstand zu dieser, allerdings mit geringerem Abstand zu der Bodenkante 32 verlaufen (Fig. 2, Fig. 11).

Die jeweiligen Dimensionen der Führungsnuten 59c, 59d, insbesondere die Breiten und Tiefen, sind an die Dimensionen der Verbindungsprofile 42b, 43b der Profilstreifen 42, 43 angepasst. Wie insbesondere in Fig. 11 gut zu erkennen ist, sind die Führungsnuten 59c, 59d jeweils derart ausgebildet, dass die Verbindungsprofile 42b bzw. 43b innerhalb der Führungsnuten 59c, 59d zu liegen kommen. Die Trägerstreifen 42a, 43a dagegen liegen jeweils außerhalb der Führungsnuten 59c, 59d unmittelbar auf den die Nuten 59c bzw. 59d umgebenden bzw. diese begrenzenden Bereichen der Anlageflächen 59a bzw. 59b auf.

Die Walzen des stromab der Schweißaggregate 45a-45f angeordneten Führungswalzenpaares 64b, 64d verfügen jeweils auf ihren Umfangsflächen 64e, 64f über eine insbesondere mittig in Umfangsrichtung verlaufende Führungsnut 65. Dementsprechend kommt während der gemeinsamen Förderung von Folienbahn 44 und Verschlussmittelbahn 41 durch das Walzenpaar 64b, 64d in der Führungsnut 65 der Führungswalze 64b unmittelbar der Profilstreifen 42 der Verschlussmittelbahn 41 zu liegen. In der Führungsnut 65 der gegenüberliegenden Führungswalze 64d liegt dagegen ein Abschnitt des hinteren Bereichs 34a der Folienbahn 44 an sowie oberhalb dessen der andere Profilstreifen 43. An den die Führungsnuten 65 umgebenden Bereichen der Umfangsflächen 64e, 64f liegen jeweils weitere Teilabschnitte der vorderen bzw. hinteren Folienbahnbereiche 33a, 34a an. Die Führungsnuten 65 fluchten jeweils mit den Führungsnuten 59c, 59d der Trennweiche 56.

Während die Profilstreifen 42, 43 in der zuvor beschriebenen Weise an den Anlageflächen 59a, 59b bzw. teilweise in den Führungsnuten 59c, 59d der Anlageflächen 59a, 59b der Trennweiche 56 anliegen, werden sie mit der Folienbahn 44 verschweißt. Dabei liegt der später die Vorderwand 33 des Tabakbeutels 30 bildende, vordere Bereich 33a der Folienbahn 44 mit dessen Innenseite an dem Trägerstreifen 42a des Profilstreifens 42 an, nämlich parallel zu der Längsoberkante des vorderen Folienbahnbereichs 33a, und zwar etwas unterhalb desselben.

In ähnlicher Weise liegt bei der Verschweißung des Profilstreifens 43 mit dem später die Rückwand 34 bildenden, hinteren Folienbahnbereich 34a die Innenseite des hinteren Folienbahnbereichs 34a in geeigneter Weise an dem Trägerstreifen 43a des Profilstreifens 43 an.

Im Rahmen des Schweißvorgangs werden die Schweißbacken 60a-60f der Schweißaggregate 45a-45f jeweils in einer horizontalen Bewegung an die entsprechenden Folienbereiche heranbewegt und die Profilstreifen 42, 43 mit den Innenseiten der späteren Vorderwand 33 bzw. Rückwand 34 verschweißt. Anschließend werden die Schweißbacken zurückbewegt. Diese Hin- und Herbewegungen erfolgen taktweise.

Auch die Schweißaggregate 45a-45f stellen im Zusammenhang der Erfindung eine eigenständige Besonderheit dar. Denn sie sind als Ultraschallschweißaggregate ausgebildet. Dementsprechend sind die Schweißbacken 60a-60f Ultraschall-Sonotroden. Im Gegensatz dazu werden bei Beutelpackern des Standes der Technik die Profilstreifen bzw. Verschlussmittel ausschließlich durch thermisches Schweißen mit den jeweiligen Folienbahnen verbunden. Die dabei entstehende, starke Wärme führt zu einer Reihe von Nachteilen. Zum einen sind die jeweiligen Taktzeiten, die für thermisches Schweißen benötigt werden, im Vergleich zu Ultraschallschweißvorgängen deutlich größer. Weiter dehnen sich die Folien unter der starken Wärmeeinbringung beim thermischen Schweißen zum Teil erheblich aus. Dies führte teilweise zu ungewollten Lageveränderungen zwischen Folienbahn und Verschlussmittel führen.

Da sich allerdings auch die Ultraschall-Sonotroden 60a-60f in einem bestimmten Umfang erwärmen, sind ein oder mehrere Temperatursensoren 85 zur Messung der Temperatur derselben vorgesehen. Bei Erreichen oder bei Überschreiten eines vorgegebenen Temperaturgrenzwertes wird die Leistung der Ultraschall-Sonotroden 60a-60f mittels einer geeigneten Steuereinrichtung verringert.

Die Ultraschall-Sonotroden 60a-60f werden in üblicher Weise durch nicht dargestellte Ultraschallgeneratoren bzw. an diese angeschlossene Ultraschallkonverter 61-61f gespeist. Diese Ultraschallkonverter 61a-61f sind jeweils in horizontalen Ebenen gelagert und zusammen mit den Sonotroden 60a-60f in der horizontalen Ebene aus einer von der eigentlichen Schweißposition beabstandeten Stellung in die Schweißstellung verfahrbar.

Um zu verhindern, dass die Folienbereiche, an denen die heißen Schweißbacken 60a-60f während des Schweißvorgangs anliegen, bei der Rückbewegung derselben an diesen heißen Schweißbacken 60a-60f anheften und unbeabsichtigt mitgeführt werden bzw. um ein derartiges Mitführen zu begrenzen, sind optional zu beiden Seiten der Trennweiche 56 Niederhaltemittel 86a, 86b vorgesehen. Diese sind vorliegend derart ausgebildet und positioniert, dass eventuell im Rahmen der Rückbewegung mitgeführte Folienbereiche an diese Niederhaltemittel 86a, 86b anstoßen und bei der weiteren Rückbewegung der Schweißbacken 60a-60f nicht über die durch das jeweilige Niederhaltemittel 86a, 86b definierte Anschlagebene hinaus weiter mitgeführt werden. Die durch das jeweilige Niederhaltemittel 86a, 86b definierte Anschlagebene erstreckt sich dabei jeweils in einem gewissen Abstand zu den seitlichen Anlageflächen 59a, 59b der Trennweiche 56 parallel zu diesen. Jeder Anlagefläche 59a, 59b ist dabei jeweils ein Niederhaltemittel 86a, 86b zugeordnet. Jedes Niederhaltemittel 86a, 86b verfügt in der vorliegenden Ausführungsform über zwei in der Anschlagebene mittels geeigneter Führungsmittel 87a, 87b geführte, voneinander beabstandete Niederhaltebleche. Der Abstand der Niederhaltebleche ist dabei derart gewählt, dass sich die Schweißbacken 60a-60f senkrecht zu der Anschlagebene durch den sich ergebenden Freiraum zwischen den Niederhalteblechen hindurch bewegen können.

Eine erste Gruppe von Schweißaggregaten 45a-45c ist der einen Anlagefläche 59a, 59b bzw. der einen (Längs-)Seite der Trennweiche 56 zugeordnet, eine zweite Gruppe von Schweißaggregaten 45a-45f der gegenüberliegenden (Längs-)Seite der Trennweiche 56. Jede Gruppe von Schweißaggregaten ist dabei jeweils mittels sogenannter Brückenteile 109a-109f jeweils an einem gemeinsamen, der jeweiligen Trennweichenseiten zugeordneten Träger 88a bzw. 88b, nämlich vorliegend einem Stahlklotz, gelagert. Im vorliegenden Fall sind die eigentlichen Ultraschallgeneratoren 61a-61f innerhalb des Trägers positioniert.

Jedem Trägers ist jeweils ein eigener Linearantrieb 62a bzw. 62b zugeordnet, nämlich vorliegend jeweils ein Druckluftzylinder, dessen jeweilige Kolbenstange 89a, 89b an dem jeweiligen Träger 88a, 88b befestigt ist. Mittels entsprechenden Hubbewegungen des jeweiligen Druckluftzylinders 62a, 62b kann der jeweilige Träger 88a, 88b und mit ihm die an diesem jeweils gelagerten Schweißaggregate 45a-45f der Schweißaggregategruppen in Richtung der jeweiligen Trennweichenseite in die Schweißstellung verfahren werden bzw. umkehrt von dieser weg.

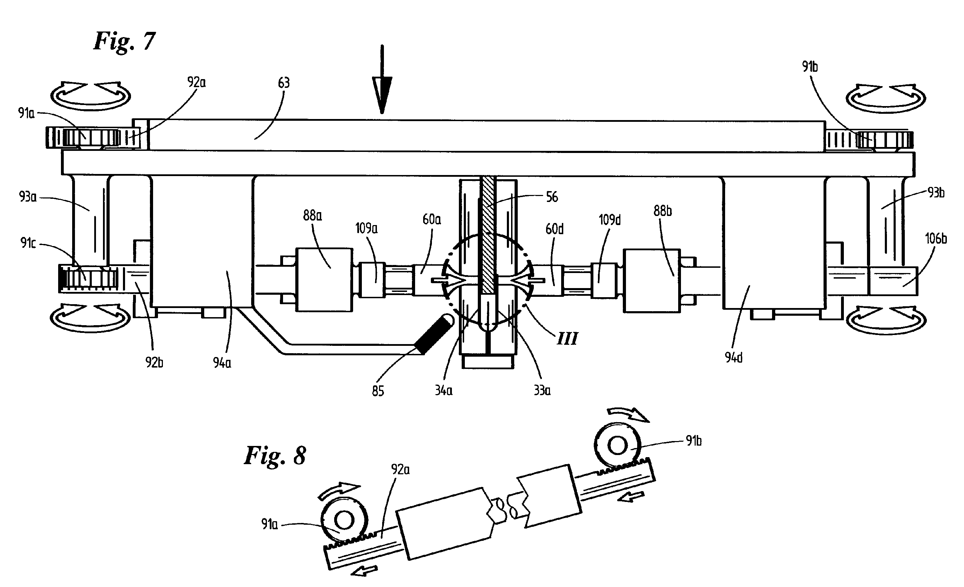

Wie insbesondere in Fig. 7 gut erkennbar ist, sind die einzelnen Schweißaggregate 45a-45f an einem gemeinsamen Tragrahmen 63 gelagert. Der Tragrahmen 63 ist C-förmig bzw. C-artig als insbesondere geschlossener Rahmen ausgebildet, um möglichen Verzug durch den beim Schweißen entstehenden Anpressdruck zu verhindern.

In einer horizontalen Ebene liegen sich jeweils zwei Schweißaggregate gegenüber und bilden Schweißaggregatepaare, nämlich die Schweißaggregatepaare 45a, 45d; 45b, 45e und 45c, 45f. Bezogen auf eine durch die Trennweiche 56 verlaufende, vertikale Mittelebene sind die einzelnen Schweißaggregate 45a-45f der jeweiligen Schweißaggregatepaare 45a, 45d; 45b, 45e und 45c, 45f in der gemeinsamen horizontalen Ebene gegenüberliegend positioniert. Gut erkennbar ist dies an dem Schweißaggregatepaar in Fig. 7.

Um zu gewährleisten, dass die sich gegenüber liegenden Schweißbacken 60a-60f eines Schweißaggregatepaares während des Schweißvorgangs jeweils mit identischem Druck an dem jeweiligen Folienbereich anliegen, ist eine Synchronisationseinrichtung 90 bzw. ein Synchronantrieb vorgesehen. Diese Synchronisationseinrichtung 90 sorgt dafür, dass die durch die Druckluftzylinder 62a, 62b initiierten Vortriebs- bzw. Rücktriebsbewegungen insbesondere gegenüber liegender Schweißaggregatepaare aufeinander abgestimmt bzw. miteinander synchronisiert werden, sodass bezogen auf die Mittelebene der Trennweiche 56 die einzelnen Schweißbacken 60a-60f der Schweißaggregatepaare gegenläufig synchron an die jeweilige Trennweichenseite heran- oder von dieser weggefahren werden.

Im vorliegenden Ausführungsbeispiel werden speziell die Bewegungen der beiden gegenüberliegenden Gruppen von Schweißaggregaten 45a-45c einerseits bzw. 45d-45f andererseits miteinander synchronisiert.

Die Synchronisationseinrichtung 90 verfügt zu diesem Zweck vorliegend über insgesamt vier Zahnräder 91 a-91 d.

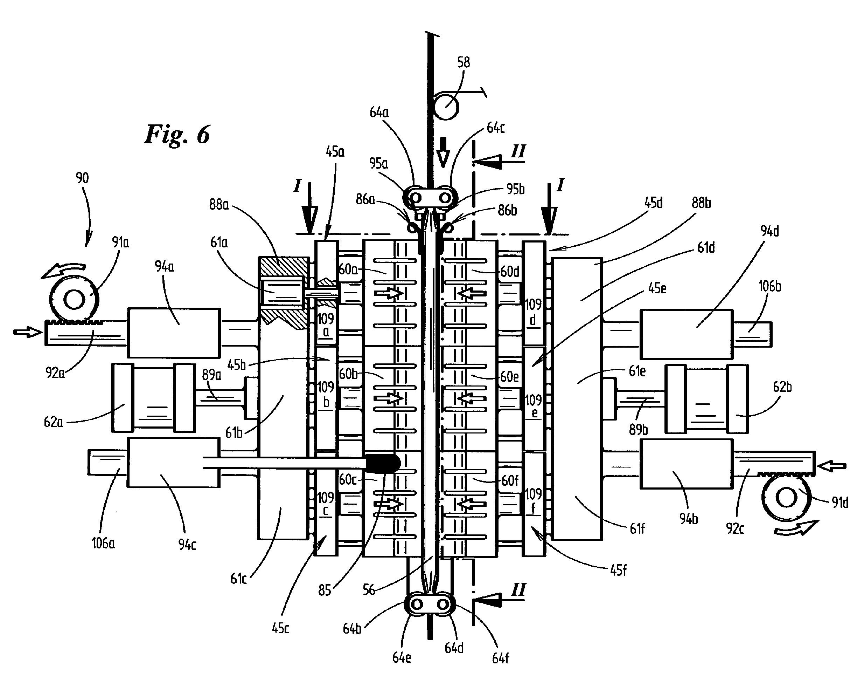

Ein erstes und ein zweites Zahnrad 91a, 91b sind in verschiedenen horizontalen Ebenen angeordnet und durch eine gemeinsame, schräg zwischen den verschiedenen Ebenen verlaufende, erste Zahnstange 92a miteinander gekoppelt. Dabei sind die beiden Zahnräder 91a, 91b jeweils an entgegengesetzten Endbereichen der ersten Zahnstange 92a angeordnet und greifen dort jeweils in entsprechende Zähne der ersten Zahnstange 92a ein (Fig. 6, 7, 8).

Das erste (in Fig. 7 linke obere) Zahnrad 91a ist des Weiteren über eine gemeinsame, horizontal verlaufende, erste Antriebswelle 93a mit einem dritten, in derselben horizontalen Ebene angeordneten Zahnrad 91 c drehfest verbunden. Die erste Antriebswelle 93a verläuft dabei senkrecht zur ersten Zahnstange 92a. Dieses dritte Zahnrad 91c ist über eine zweite Zahnstange 92b gekoppelt mit dem ersten, der Schweißaggregategruppe 45d-45f zugeordneten Träger 88b, an dem die zweite Zahnstange 92b endet bzw. an dem diese befestigt ist. Die zweite Zahnstange 92b verläuft horizontal und beabstandet zu der ersten Zahnstange 92a in einer parallelen Ebene. Die zweite Zahnstange 92b ist des Weiteren verschiebbar in einer geeigneten, ortsfesten Linearführung 94a gelagert, nämlich vorliegend in einer geeigneten Lagerhülse.

Das zweite (in Fig. 7 rechte obere), über die gemeinsamen Zahnstange 92a mit dem ersten Zahnrad 91a gekoppelte Zahnrad 91b, das versetzt unterhalb des ersten Zahnrades 91a angeordnet ist, ist über eine horizontal verlaufende, zu der ersten Welle 93a parallel verlaufende, zweite Welle 93b drehfest mit einem vierten, in derselben horizontalen Ebene angeordneten Zahnrad 91 d drehfest verbunden. Das vierte Zahnrad 91 d wiederum ist über eine dritte Zahnstange 92c gekoppelt mit dem zweiten, der Schweißaggregategruppe 45a-45c zugeordneten Träger 88b, an dem die dritte Zahnstange 92c endet bzw. an dem diese befestigt ist. Die dritte Zahnstange 92c verläuft ebenfalls horizontal und beabstandet in einer parallelen Ebene zu der ersten Zahnstange 92a sowie zudem parallel zu der zweiten Zahnstange 92b, allerdings in einer Ebene, die unterhalb der zweiten Zahnstange 92b angeordnet ist. Die dritte Zahnstange 92c ist des Weiteren ebenfalls verschiebbar in einer geeigneten, ortsfesten Linearführung 94b gelagert, nämlich vorliegend in einer geeigneten Lagerhülse.

Schließlich sind an den Trägern 88a, 88b jeweils noch zur geeigneten Parallelführung der Träger 88a, 88b während der jeweiligen Vortriebs- bzw. Rücktriebsbewegungen zusätzliche, stangenartige Führungsteile 106a, 106b befestigt. Das stangenartige Führungsteil 106a verläuft dabei parallel beabstandet unterhalb der Zahnstange 92a und ist innerhalb einer Linearführung 94c verschiebbar gelagert, das stangenartige Führungsteil 106b verläuft parallel beabstandet oberhalb der Zahnstange 92c und ist in einer Linearführung 94d verschiebbar gelagert.

Im Ergebnis werden durch den Druckluftzylinder 62b bewirkte, horizontale Bewegungen des ersten Trägers 88b über die an diesem befestigte zweite Zahnstange 92b zunächst auf das an dieser gelagerte dritte Zahnrad 91 c übertragen, wodurch letzteres in Rotation versetzt wird. Hierdurch wird über die gemeinsame erste Welle 93a das erste Zahnrad 91a in Rotation versetzt. Dessen Rotationsbewegung wird wiederum in eine horizontale Linearbewegung der ersten Zahnstange 92a übersetzt. Diese wiederum versetzt das an der ersten Zahnstange 92a gelagerte, zweite Zahnrad 91b in Rotation sowie das über die zweite Welle 93b mit diesem gekoppelte vierte Zahnrad91d. Die Kopplung des vierten Zahnrades 91dmit dem zweiten Träger 88a über die dritte Zahnstange 92c sorgt für eine - bezogen auf die Trennweichenmittelebene - zu der Bewegung des ersten Trägers 88b entsprechend gegenläufige Bewegung.

Durch die Synchronisationseinrichtung werden die beiden Träger 88a, 88b auch dann mit identischer Geschwindigkeit verfahren, sollten die beiden, den jeweiligen Aggregategruppen zugeordneten Druckluftzylinder eine eigentlich voneinander abweichende Vor- oder Rücktriebsbewegung bewirken.

Abweichend von der dargestellten Synchronisationseinrichtung können naturgemäß auch andere geeignete Einrichtungen verwendet werden.

In der Fig. 7 sind die Schweißbacken bzw. Sonotroden 60a, 60d der Schweißaggregate 45a, 45d an die zu verschweißenden Bereiche der Folienbahn 44 heran bewegt worden, sodass sie sich jeweils in der eigentlichen Schweißposition befinden. Anschließend werden dann die Ultraschweißschwingungen in die Folienbahn 44 bzw. in die darunter angeordneten Profilstreifen 42, 43 eingeleitet.

Bezogen auf die vertikale Mittelebene durch die Trennweiche 56 sind die Schwingungsbewegungen der Sonotroden 60a, 60d (sowie sämtlicher weiteren Sonotroden der weiteren Schweißaggregatepaare in entsprechender Weise) vorzugsweise aufeinander abgestimmt. Die Sonotroden 60a, 60d vollziehen bevorzugt bezogen auf diese vertikale Mittelebene Schwingungsbewegungen mit gleicher Frequenz und gleicher Phase, sodass sie relativ zu dieser Mittelebene phasengleich aufeinander bzw. auf die Trennweiche 56 zu bzw. von dieser weg bewegt werden. Dies ist aber nicht zwingend notwendig.

Optional sind Unterlegmittel 95a, 95b für die Schweißbacken 60a-60f vorgesehen, im vorliegenden Fall Unterlegbleche. Diese verlaufen ebenfalls in einer Ebene parallel zu den seitlichen Anlageflächen 59a, 59b der Trennweiche 56 jeweils mit Abstand zu diesen Anlageflächen 59a, 59b. Jeder der Anlageflächen 59a, 59b ist dabei mindestens ein Unterlegmittel 95a, 95b zugeordnet. Jedes Unterlegmittel ist dabei zwischen der jeweiligen Anlagefläche 59a, 59b und den der jeweiligen Anlagefläche 59a, 59b zugeordneten Schweißbacken 60a-60f der Schweißaggregate 45a-45f positioniert. Zu diesem Zweck werden die Unterlegmittel 95a, 95b an geeigneten Halteelementen 96a, 96b entsprechend gehalten. Jedes Unterlegmittel 95a, 95b erstreckt sich über sämtliche der der jeweiligen Anlagefläche 59a, 59b zugeordneten Schweißbacken 60a-60f. Durch die Unterlegmittel 95a, 95b wird verhindert, dass Folienbereiche während des Schweißvorgangs in Spalten zwischen benachbarten Schweißbacken 60a-60f zu liegen kommen, wodurch entsprechende unerwünschte Abdrücke auf den Folien erzeugt werden würden. Die Unterlegmittel 95a, 95b leiten die von den Schweißbacken 60a-60f einer gemeinsamen Schweißebene erzeugten Ultraschallbewegungen flächig auf die Folie weiter.

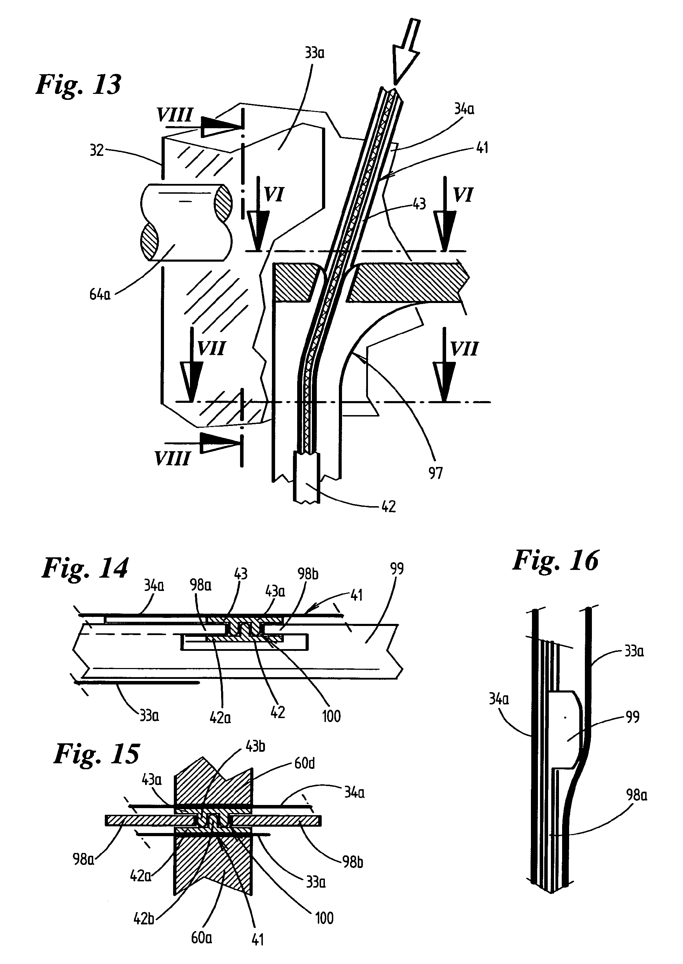

In den Fig. 13 - 16 ist eine alternative Ausführungsform der ersten Schweißstation 45 gezeigt. Die Schweißaggregate 45a-45f sowie weitere wesentliche Teile sind gegenüber der Ausführungsform der Zeichnungen 6-12 unverändert.

Allerdings ist keine Trennweiche 56 zur Trennung der Profilstreifen 42, 43 voneinander vorhanden, da diese in dem miteinander verbundenem Zustand mit der Folienbahn 44 x verschweißt werden. Hierzu ist eine besondere Anlageeinrichtung 97 vorgesehen, entlang der die geschlossene Verschlussmittelbahn 41 geführt wird bzw. an der das Verschlussmittel 41 während des Schweißvorgangs anliegt.

Die Anlageeinrichtung 97 verfügt über zwei Anlagemittel 98a, 98b, die jeweils im anliegenden Zustand des geschlossenen Verschlussmittels 41 von gegenüberliegenden Seiten zwischen die beiden miteinander verbundenen Profilstreifen 42, 43 bzw. zwischen die beiden voneinander beabstandeten Trägerstreifen 42a, 43a der verbundenen Profilstreifen 42, 43 greifen. Die Trägerstreifen 42a, 43a liegen während des Schweißvorgangs jeweils an gegenüberliegenden Seiten des jeweiligen Anlagemittels 98a, 98b an.

Im vorliegenden Fall sind die Anlagemittel 98a, 98b durch Teilbereiche von zwei Blechstreifen gebildet, die mittels eines geeigneten Halters 99 unter Bildung eines Zwischenraumes 100 in der Förderebene der Verschlussmittelbahn 41 geführt sind. Die Verschlussmittelbahn 41 wird entlang des Zwischenraumes 100 zwischen den Blechstreifen geführt, nämlich derart, dass die nach innen bzw. zu dem jeweils anderen Profilstreifen 42 bzw. 43 gerichteten Seiten der Trägerstreifen 42a, 43a der jeweiligen Profilstreifen 42, 43 jeweils mindestens bereichsweise an gegenüber liegenden, parallelen Seiten des jeweiligen Blechstreifens anliegen.

Die Breite des Zwischenraums 100 zwischen den Anlagemitteln 98a, 98b bzw. zwischen den Blechstreifen entspricht dabei in etwa der Breite des breiteren Verbindungsprofils der beiden Profilstreifen 42, 43, nämlich des Verbindungsprofils 43b des Profilstreifens 43.

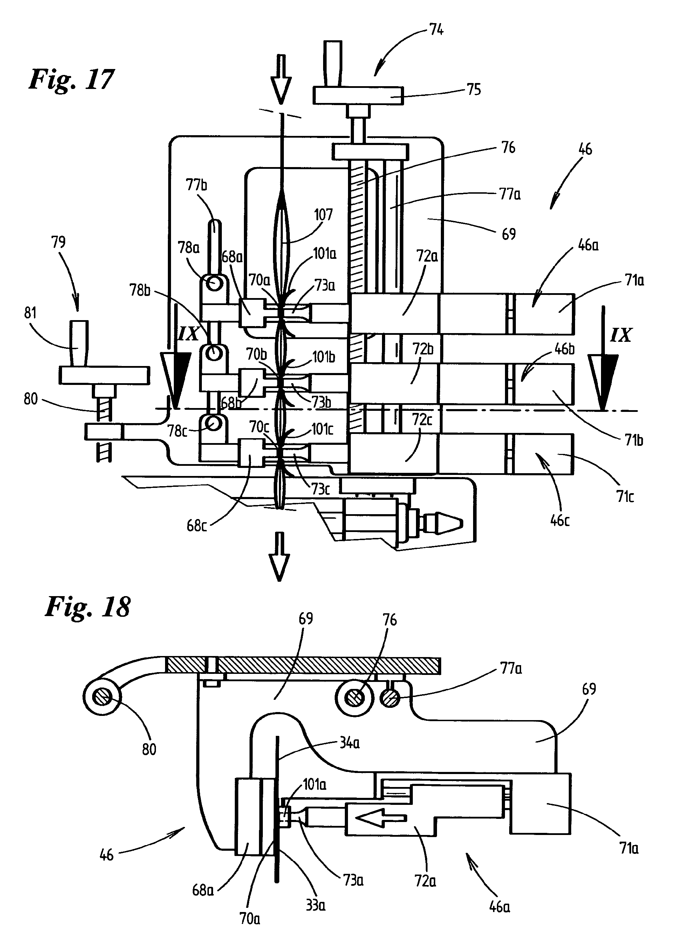

Die Fig. 17, 18 zeigen die zweite Schweißstation 46, an der die gegenüberliegenden Endabschnitte 49-52 der Profilstreifen 42, 43 miteinander verschmolzen bzw. gecrasht werden. Auch entlang dieser Schweißstation 46 werden die Materialbahnen 41, 44, d.h. die fortlaufende Folienbahn 44 mit an den jeweiligen Bahnabschnitten bereits angeschweißten Profilstreifen 42, 43, in vertikaler Richtung geführt.

Die Schweißaggregate 46a, 46b und 46c, die aufgebaut sind wie die Schweißaggregate 45a, 45b und 45c der Schweißstation 45, also als Ultraschallschweißaggregate, fahren für den Schweißvorgang an die Folienbahn 44 heran. Während der nachfolgenden Schweißvorgänge liegen die jeweiligen Abschnitte der Folienbahn 44 an Anlageflächen 70a-70c ambossartiger Anlageeinrichtungen 68a-68c an. Jedem Schweißaggregat ist in derselben horizontalen Ebene jeweils eine Anlageeinrichtung 68a, 68b bzw. 68c zugeordnet. Die Anlageflächen 70a-70c verlaufen parallel zur vertikalen Förderebene.

Stromauf der Schweißaggregate ist eine Trennweiche 107 zur Öffnung der in dem vorliegenden Ausführungsbeispiel in geschlossenem Zustand zu der zweiten Schweißstation geführten Verschlussmittelbahn angeordnet.

Sowohl die Anlageeinrichtungen 68a-68c als auch die Schweißaggregate 46a-46c sind an einem gemeinsamen Rahmen 60 angeordnet.

Zum Verschweißen der jeweiligen Abschnitte 49, 50 bzw. 51, 52 der Profilstreifen 42, 43 werden die jeweiligen Schweißaggregate 46a-46c in ähnlicher Weise wie die Schweißaggregate 45a-45c der ersten Schweißstation 45 mittels Linearantrieben 71a-71c in die Schweißposition verfahren. Ultraschallgeneratoren 72a-72c versetzen die jeweiligen Ultraschallsonotroden 73a-73c in die benötigten Schweißschwingungen.

Weiterhin sind analog zu der ersten Schweißstation 45 Niederhaltemittel 101a-101c vorgesehen, die verhindern, dass bei Rückbewegungen der Schweißbacken 73a-73c die Folie an den heißen Schweißbacken 73a-73c anheften und unbeabsichtigt mitgeführt werden, bzw. die ein derartiges Mitführen begrenzen. Die Niederhaltemittel 101a-101c sind wiederum jeweils zwischen Schweißbacke 73a-73c und jeweiliger Anlagefläche 70a-70c positioniert.

Zur Anpassung der vertikalen Positionen der einzelnen Schweißaggregate 46a-46c sind diese mittels eines Stellantriebs 74 entlang der Folienbahn 44 vertikal verfahrbar. Dementsprechend sind die Positionen der Sonotroden 73a-73c relativ zu der Folienbahn 44 einstellbar. Im vorliegenden Ausführungsbeispiel ist der Stellantrieb 74 als händisch betätigbarer Spindelantrieb mit Handkurbel 75 sowie Spindel 76 ausgebildet. Die jeweiligen Schweißaggregate 46a-46c sind mit der Spindel 76 jeweils in geeigneter Weise wirkverbunden.

Alternativ können die einzelnen Aggregate 46a-46c natürlich auch mittels eines oder mehrerer motorischer Antriebe verfahren werden.

Die Spindel 76 weist jeweils unterschiedliche Gewindesteigungen auf. Die einzelnen Schweißaggregate 46a-46c sind jeweils diesen unterschiedlichen Gewindesteigungsabschnitten zugeordnet. Die vertikalen Abstände der einzelnen Aggregate 46a-46c werden auf diese Weise durch Betätigung der Spindel 76 relativ zueinander verändert. Geführt werden die Aggregate 46a-46c über eine in der Vertikalebene verlaufende Rundführung 77a, die an dem Rahmen 69 gelagert ist.

Bei Einstellung der vertikalen Positionen der einzelnen Schweißaggregate 46a-46c müssen dazu korrespondierend die Anlageeinrichtungen 68a-68c ebenfalls positionsverändert werden können. Zu diesem Zweck sind die Anlageeinrichtungen 68a-68c verschiebbar in einer gemeinsamen, vertikal verlaufenden, in dem Rahmen 69 eingelassenen Führungsnut 77b gelagert. Mittels geeigneter Befestigungsmittel 78a-78c können die Anlageeinrichtungen 68a-68c in der jeweils gewünschten vertikalen Position festgesetzt werden.

Die einzelnen Schweißaggregate 46a-46c sowie die Anlageeinrichtungen 68a-68c sind auch in ihrer Gesamtheit, d. h. ohne die einzelnen Positionen relativ zueinander zu verändern, in der Vertikalebene nach oben und unten verstellbar.

Zu diesem Zweck ist an dem Rahmen 69 ein weiterer Stellantrieb 79 angeordnet, mit dem die gesamte Schweißstation 46 bzw. der Rahmen 69 mit sämtlichen daran gelagerten Aggregaten nach oben und unten verstellbar ist. Der Stellantrieb 79 verfügt ebenfalls über eine vertikal verlaufende Spindel 80 sowie ein Handrad 81. Das dem Handrad 81 gegenüberliegende Ende der Spindel 80 ist an einem Rahmen 82 der dritten Schweißstation 47 gelagert. Die vertikale Position der Schweißstation 46 kann mithin relativ zu der Schweißstation 47 eingestellt werden.

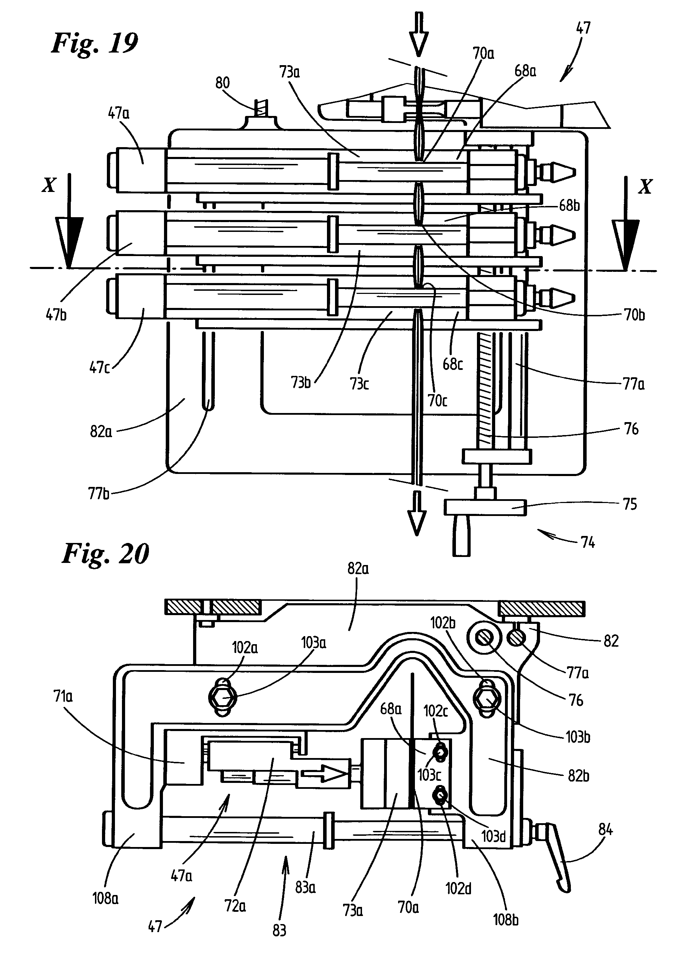

In sehr analoger Weise zu der zweiten Schweißstation 46 ist die dritte Schweißstation 47 aufgebaut (Fig. 19 - 22). Gleichartige Bauteile sind aus diesem Grund in den entsprechenden Zeichnungen mit denselben Bezugsziffern versehen. An dieser Schweißstation 47 werden die Quernähte 35 der Beutel 30 geschweißt.

Die dritte Schweißstation 47 weist im Unterschied zur Schweißstation 46 einen Hauptrahmen 82a auf, an dem ein relativ zu dem Hauptrahmen 82a in Horizontalrichtung, und zwar quer zur Schweißrichtung, verstellbarer, C-förmiger bzw. C-artiger Unterrahmen 82b angeordnet ist.

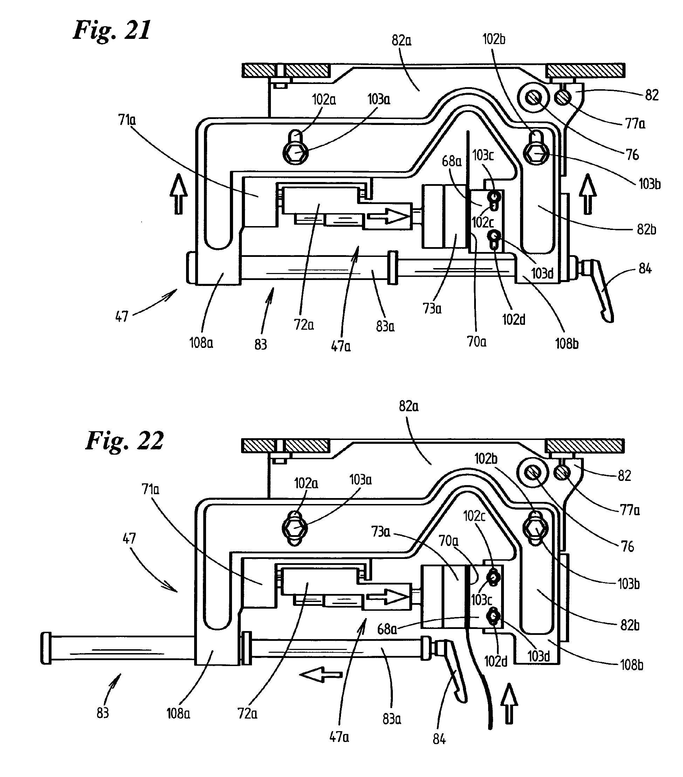

Die Verstellbarkeit des Unterrahmens 82b relativ zu dem Hauptrahmen 82a wird vorliegend erreicht, indem der Unterrahmen 82b mit geeigneten, Langlöcher 102a, 102b des Unterrahmens 82b durchgreifenden Befestigungsmitteln 103a, 103b, etwa Schrauben, an dem Hauptrahmen 82a befestigt ist. Die Längserstreckung der Langlöcher 102a, 102b verläuft dabei horizontal, nämlich in der Richtung quer zur Schweißrichtung bzw. zur Richtung der Bewegung der Schweißbacken 73a-73c. Dies dient dazu, bei Verwendung unterschiedlicher Beutelformate bzw. unterschiedlicher Folienformate die Position der Schweißaggregate 47a-47c gemeinsam mit den Anlageeinrichtungen 68a-68c relativ zu der Folie 44 verändern zu können (Fig. 21).

In analoger Weise ist noch vorgesehen, die jeweiligen ambossartigen Anlageeinrichtungen 68a-68c zusätzlich relativ zu dem Unterrahmen 82b in der horizontalen Ebene, nämlich ebenfalls quer zur Schweißrichtung, verschiebbar zu lagern.

Dies dient dazu, bei Verwendung unterschiedlicher Beutelformate bzw. unterschiedlicher Folienformate die Position der Anlageeinrichtungen 68a-68c entsprechend in geeigneter Weise relativ zu den Schweißaggregaten 47a-47c bzw. Schweißbacken 73a-73c bzw. zu der Folie 44 anpassen zu können.

Hierzu sind die Anlageeinrichtungen 68a-68c in dem vorliegenden Ausführungsbeispiel mittels geeigneter, Langlöcher 102c, 102d der jeweiligen Anlageeinrichtung 68a-68c durchgreifender Befestigungsmittel 103c, 103d an dem Unterrahmen 82b befestigt. Die Längserstreckung der Langlöcher 102c, 102d verläuft ebenfalls horizontal, nämlich in der Richtung quer zur Schweißrichtung bzw. zur Richtung der Bewegung der Schweißbacken 73a-73c.

Die freien Enden 108a, 108b des Unterrahmens 82b sind miteinander verspannt durch ein Verspannmittel 83. Das Verspannmittel 83 umfasst eine Zugstrebe 83a. Die Zugstrebe 83a ist an dem einen freien Ende 108a des Unterrahmens 82 verschieblich gelagert, an dem anderen freien Ende 108b lösbar mittels eines Befestigungshebels 84 befestigt. Die Zugstrebe 83a kann daher bei Bedarf gelöst und aus dem vertikalen Förderweg herausbewegt werde (Fig. 22). Der entstehende Freiraum kann genutzt werden, um die Folienbahn 44 in einfacher Weise ausgehend von den freien Enden 108a, 108b zwischen die jeweilige Sonotrode 73a-73c einerseits und die jeweilige Anlagefläche 70a-70c andererseits einzufädeln.

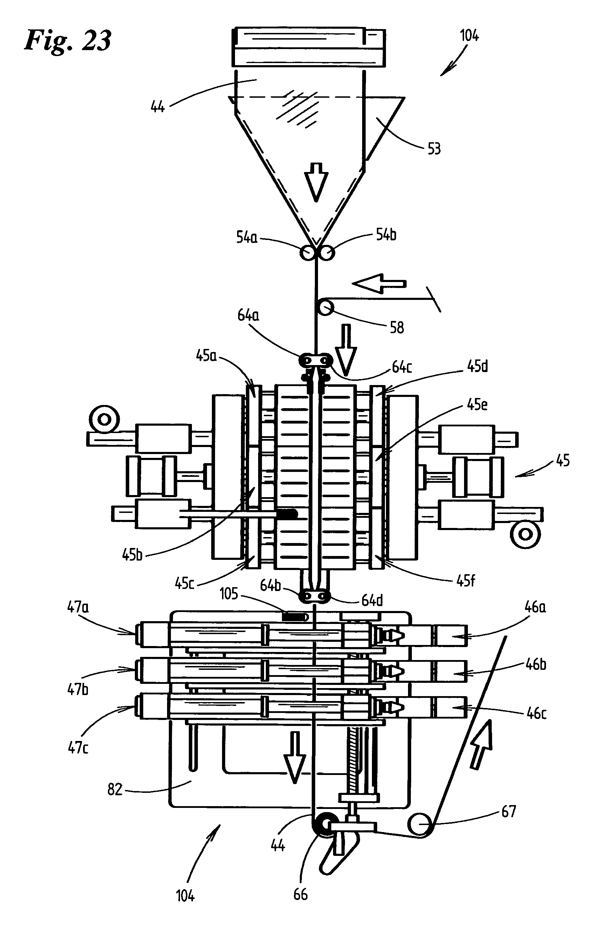

In den Fig. 23 - 25 wird schließlich eine weitere Alternative zu der Ausführungsform der Fig. 1 gezeigt.

Im Gegensatz zu der Ausführungsform der Fig. 1 sind hier die Schweißstation 46 zum Verschmelzen der Endabschnitte 49, 50 der Profilstreifen 42, 43 sowie die Station 47 zum Schweißen der Quernähte 35 der Folienbahn 44 in einer gemeinsamen Schweißstation 104 zusammengefasst. Das Verschmelzen der Endabschnitte 49, 50 bzw. 51, 52 und das Schweißen der Quernähte 35 erfolgt zeitgleich.

Zu diesem Zweck sind die Schweißaggregate 46a-46c sowie die 47a-47c gemeinsam an einem C-förmigen bzw. C-artigen Unterrahmen 82b angeordnet. Weiter sind an diesem die jeweiligen Anlageeinrichtungen gelagert. Zur besseren Unterscheidbarkeit sind die Bezugszeichen der Anlageeinrichtungen der Schweißaggregate 47a-47c sowie der Schweißbacken zusätzlich mit einem "'" gekennzeichnet.

In jeweils einer horizontalen Ebene sind Paare 46a, 47a; 46b, 47b bzw. 46c, 47c von Schweißaggregaten 46a-46c zum Verschmelzen der Profilstreifenenden 49-52 bzw. von Schweißaggregaten 47a-47c zum Quernahtschweißen gebildet. Die insgesamt drei Paare 46a, 47a; 46b, 47b bzw. 46c, 47c von Schweißaggregaten sind jeweils stromab untereinander angeordnet. In entsprechender Weise sind die Anlageeinrichtungen 68a-68c bzw. 68a'-68c' den jeweiligen Schweißaggregaten gegenüberliegend zugeordnet.

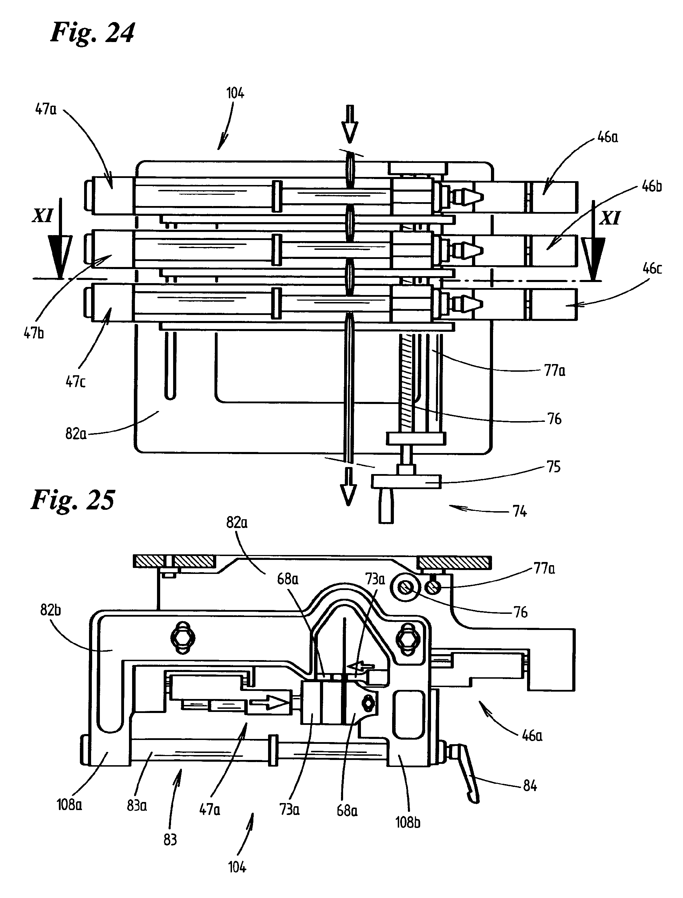

Die Schweißaggregate eines Paares, beispielsweise die Schweißaggregate 46a, 47a, sind bezogen auf die Folienbahn 44 versetzt zueinander angeordnet, vgl. Fig. 25. Dabei sind die Schweißaggregate zum Quernahtschweißen 47a-47c sowie die Schweißaggregate 46a-46c, insbesondere die jeweiligen Schweißbacken der Aggregate 46a-...-47c derart positioniert, dass die jeweils geschweißte Quernaht 35 relativ zu der Bodenkante 32 unterhalb der zu verschmolzenen Endabschnitte 49, 50 bzw. 51, 52 endet.

Sämtliche Schweißaggregatepaare sind gemeinsam mit den entsprechenden Anlageeinrichtungen 68a-68c bzw. 68a'-68c' relativ zu der Folienbahn bewegbar, nämlich durch den entsprechend ausgebildeten Spindelantrieb 79.

### Bezugszeichenliste:

- 30: Beutel
- 31: Tabakportion
- 32: Bodenkante
- 33: Vorderwand
- 33a: vorderer Folienbereich
- 34: Rückwand
- 34a: hinterer Folienbereich
- 35: Quernaht
- 36a: Seitennaht
- 36b: Seitennaht
- 37: Umschlaglasche
- 38: Klebestreifen
- 39: Füll-/Entnahmeöffnung
- 40: Längsnaht
- 41: Verschlussmittel
- 42: Profilstreifen
- 42a: Trägerstreifen
- 42b: Verbindungsprofil
- 43: Profilstreifen
- 43a: Trägerstreifen
- 43b: Verbindungsprofil
- 44: Materialbahn
- 45: Schweißstation
- 45a: Schweißaggregat
- 45b: Schweißaggregat
- 45c: Schweißaggregat
- 45d: Schweißaggregat
- 45e: Schweißaggregat
- 45f: Schweißaggregat
- 46: Schweißstation
- 46a: Schweißaggregat
- 46b: Schweißaggregat
- 46c: Schweißaggregat
- 47: Schweißstation
- 47a: Schweißaggregat
- 47b: Schweißaggregat
- 47c: Schweißaggregat
- 48: Falteinrichtung

- 49: Endabschnitt
- 50: Endabschnitt
- 51: Endabschnitt
- 52: Endabschnitt
- 53: Faltdreieck
- 54a: Führungsrolle
- 54b: Führungsrolle
- 55: Führungsspalt
- 56: Trennweiche
- 57a: Freies Ende
- 57b: Freies Ende
- 58: Umlenkrolle
- 59a: seitliche Anlagefläche
- 59b: seitliche Anlagefläche
- 59c: Führungsnut
- 59d: Führungsnut
- 60a: Schweißbacke
- 60b: Schweißbacke
- 60c: Schweißbacke
- 60d: Schweißbacke
- 60e: Schweißbacke
- 60f: Schweißbacke
- 61a: Ultraschallgenerator
- 61b: Ultraschallgenerator
- 61 c: Ultraschallgenerator
- 61 d: Ultraschallgenerator
- 61 e: Ultraschallgenerator
- 61f: Ultraschallgenerator
- 62a: Linearantrieb
- 62b: Linearantrieb
- 63: Tragrahmen
- 64a: Führungswalze
- 64b: Führungswalze
- 64c: Führungswalze
- 64d: Führungswalze
- 64e: Umfangfläche
- 64f: Umfangfläche
- 65: Führungsnut
- 66: Vorzugswalze
- 67: Umlenkrolle
- 68a: Anlageeinrichtung
- 68b: Anlageeinrichtung
- 68c: Anlageeinrichtung
- 69: Rahmen
- 70a: Anlagefläche
- 70b: Anlagefläche
- 70c: Anlagefläche
- 71a: Linearantrieb
- 71b: Linearantrieb
- 71c: Linearantrieb
- 72a: Ultraschallgenerator
- 72b: Ultraschallgenerator
- 72c: Ultraschallgenerator
- 73a: Schweißbacke
- 73b: Schweißbacke
- 73c: Schweißbacke
- 74: Stellantrieb
- 75: Handkurbel
- 76: Spindel
- 77a: Rundführung
- 77b: Führungsnut
- 78a: Befestigungsmittel
- 78b: Befestigungsmittel
- 78c: Befestigungsmittel
- 79: Stellantrieb
- 80: Spindel
- 81: Handrad
- 82: Rahmen
- 82a: Freies Ende
- 82b: Freies Ende
- 83: Verspannmittel
- 83a: Zugstrebe
- 84: Befestigungshebel
- 85: Temperatursensor
- 86a: Niederhaltemittel
- 86b: Niederhaltemittel
- 87a: Führungsmittel
- 87b: Führungsmittel
- 88a: Träger
- 88b: Träger
- 89a: Kolbenstange
- 89b: Kolbenstange
- 90: Synchronisationseinrichtung
- 91a: Zahnrad
- 91b: Zahnrad
- 91c: Zahnrad
- 91d: Zahnrad
- 92a: Zahnstange
- 92b: Zahnstange

- 92c: Zahnstange
- 93a: Antriebswelle
- 93b: Antriebswelle
- 94a: Linearführung
- 94b: Linearführung
- 94c: Linearführung
- 94d: Linearführung
- 95a: Unterlegmittel
- 95b: Unterlegmittel
- 96a: Halteelement
- 96b: Halteelement
- 97: Anlageeinrichtung
- 98a: Anlagemittel
- 98b: Anlagemittel
- 99: Halter
- 100: Zwischenraum
- 101a: Niederhaltemittel
- 101b: Niederhaltemittel
- 101c: Niederhaltemittel
- 102a: Langloch
- 102b: Langloch
- 103a: Befestigungsmittel
- 103b: Befestigungsmittel
- 103c: Befestigungsmittel
- 103d: Befestigungsmittel
- 104: Schweißstation
- 105: Druckmarkenleser
- 106a: Führungsteil
- 106b: Führungsteil
- 107: Trennweiche
- 108a: Freies Ende
- 108b: Freies Ende
- 109a: Brückenteil
- 109b: Brückenteil
- 109c: Brückenteil
- 109d: Brückenteil
- 109e: Brückenteil
- 109f: Brückenteil

## Patentansprüche

1. Verfahren zum Herstellen von Beuteln (30) aus Folie (44) oder dergleichen für Schüttgüter oder faseriges Material, vorzugsweise für Tabak (31), wobei eine fortlaufende Folienbahn (44) und/oder mindestens eine weitere fortlaufende Materialbahn (41) entlang wenigstens einer Schweißstation (45, 46, 47, 104) geführt werden, an der Abschnitte der Folie (33a) (und/oder des mindestens einen weiteren Materials (41) verschweißt werden, bevorzugt mit anderen Abschnitten der Folie (34a) und/oder mit dem weiteren Material (41), insbesondere mit Teilen eines mehrfach wirkenden Verschlussmittels (41), **dadurch gekennzeichnet, dass** die Folienbahn (44) und/oder die mindestens eine weitere Materialbahn (41) insbesondere taktweise wenigstens annähernd in Vertikalrichtung entlang der mindestens einen Schweißstation (45, 46, 47, 104) geführt werden und/oder dass die fortlaufende Folienbahn (44) und/oder die mindestens eine weitere Materialbahn (41), insbesondere taktweise, durch Ultraschall-Schweißen verschweißt werden.

2. Verfahren gemäß Anspruch 1, **dadurch gekennzeichnet, dass** die oder jede Schweißstation (45, 46, 47, 104) Schweißbacken (60a, ...), insbesondere Ultraschallsonotroden aufweist, die jeweils in einer horizontalen Ebene an mindestens eines der zu verschweißenden Materialien (41, 44) heranbewegt werden, sodass die Schweißbacken (60a,...) während des eigentlichen Schweißvorgangs insbesondere unter Druckbeaufschlagung an dem jeweiligen Material (41, 44) anliegen.

3. Verfahren gemäß einem oder mehreren der vorhergehenden Ansprüche, **dadurch gekennzeichnet, dass** mindestens zwei, vorzugsweise drei und/oder sämtliche Schweißstationen (45, 46, 47, 104) in einer gemeinsamen vertikalen Ebene in Folienbahnförderrichtung aufeinanderfolgend, vorzugsweise untereinander, angeordnet sind.

4. Verfahren gemäß einem oder mehreren der vorhergehenden Ansprüche, **dadurch gekennzeichnet, dass** bevorzugt an einer ersten Schweißstation (45) als Verschlussmittel (41) ein mehrfach wirkender Druckverschluss an der Folienbahn (44) befestigt wird, vorzugsweise durch Ultraschallschweißen.

5. Verfahren gemäß einem oder mehreren der vorhergehenden Ansprüche, **dadurch gekennzeichnet, dass** insbesondere an einer zweiten Schweißstation (46), die vorzugsweise stromab der ersten Schweißstation (45) angeordnet ist, einzelne Abschnitte (49-52) von Profilstreifen (42, 43) des Druckverschlusses (41) miteinander verschmolzen bzw. verschweißt werden, bevorzugt durch Ultraschallschweißen und/oder dass insbesondere an einer dritten Schweißstation (47), die vorzugsweise stromab der zweiten Schweißstation (46) angeordnet ist, einzelne Abschnitte (33a, 34a) der Folie unter Bildung von sich im Wesentlichen quer zur Förderrichtung der Folienbahn (44) erstreckenden Quernähten (35) miteinander verschweißt werden, vorzugsweise durch Ultraschallschweißen.

6. Verfahren gemäß einem oder mehreren der vorhergehenden Ansprüche, **dadurch gekennzeichnet, dass** die Folienbahn (44) ohne Umlenkung zwischen den Schweißstationen (45, 56, 47, 104) geradlinig in wenigstens annähernd vertikaler Richtung entlang von mindestens zwei, vorzugsweise entlang sämtlicher Schweißstationen (45, 46, 47, 104) geführt wird.

7. Verfahren gemäß Anspruch 4, **dadurch gekennzeichnet, dass** der Druckverschluss (41) zwei miteinander lösbar verbindbare Profilstreifen (42, 43) aufweist, die als fortlaufende Profilstreifen (42, 43) in miteinander verbundenem Zustand, nämlich dem geschlossenen Zustand des Druckverschlusses (41), in den Förderweg der Folienbahn (44) eingefördert werden, die nachfolgend getrennt werden - geöffneter Zustand des Druckverschlusses (41) -, und die nachfolgend in dem getrennten Zustand jeweils einzeln mit der Folie (44) verschweißt werden.

8. Verfahren gemäß Anspruch 7, **dadurch gekennzeichnet, dass** der Druckverschluss (41) zur Trennung der verbundenen Profilstreifen (42, 43) zu einer Trennweiche (56) gefördert wird, die den Druckverschluss (41) in die beiden Profilstreifen(42, 43) trennt, wobei vorzugsweise die beiden Profilstreifen (42, 43) nach der Trennung und vor dem Verschweißen derselben entlang der Trennweiche (56) weitergefördert werden und/oder dass die Trennweiche (56) zu beiden Seiten Anlageflächen (59a, 59b) aufweist, an denen die getrennten Profilstreifen (42, 43) während des Schweißvorgangs anliegen, wobei die Schweißbacken (45a-45f) der Schweißstation (45) gegenüberliegend zu den Anlageflächen (59a, 59b) angeordnet sind.

9. Verfahren gemäß einem oder mehreren der vorhergehenden Ansprüche, **dadurch gekennzeichnet, dass** die Position der fortlaufenden Folienbahn (44) und/oder des Druckverschlusses (41) mittels eines geeigneten Sensors (105) erfasst wird, insbesondere mittels eines Druckmarkenlesers, und dass die Position der Folienbahn (44) relativ zu den Schweißbacken (60a, ...)mindestens einer Schweißstation(45, 46, 47, 104) abhängig von den von dem Sensor (105) erfassten Messwerten gesteuert und/oder geregelt wird.

10. Verfahren gemäß einem oder mehreren der vorhergehenden Ansprüche, **dadurch gekennzeichnet, dass** jeweils zwei Schweißbacken (60a,...), insbesondere Ultraschallsonotroden, in einer horizontalen Ebene gegenüberliegend angeordnet sind, und dass die Schweißbacken (60a, ...)insbesondere während des Schweißvorgangs bezogen auf eine zwischen den Schweißbacken (60a, ...) verlaufende, vertikale Mittelebene gleichförmig aufeinander zu- bzw. voneinander weg bewegt werden, wobei diese Bewegungen mittels einer geeigneten Synchronisationseinrichtung (90) miteinander synchronisiert werden.

11. Vorrichtung zum Herstellen von Beuteln (30) aus Folie oder dergleichen für Schüttgüter oder faseriges Material, vorzugsweise für Tabak (31), vorzugsweise zur Durchführung des Verfahrens gemäß Anspruch 1, insbesondere mit einem oder mehreren Merkmalen der Ansprüche 1-10, mit einer Fördereinrichtung, mit der eine fortlaufende Folienbahn (44) und/oder eine weitere fortlaufende Materialbahn (41) entlang wenigstens einer Schweißstation (45, 46, 47, 104) der Vorrichtung führbar ist, wobei die Schweißstation (45, 46, 47, 104) derart ausgebildet ist, dass an dieser Abschnitte (33a) der Folie und/oder des mindestens einen weiteren Materials (41) verschweißbar sind, bevorzugt mit anderen Abschnitten (34a) der Folie und/oder mit dem weiteren Material (41), insbesondere mit Teilen eines mehrfach wirkenden Verschlussmittels (41), **dadurch gekennzeichnet, dass** die Fördereinrichtung und die Schweißstation (45, 46, 47, 104) derart ausgebildet und angeordnet sind, dass die Folienbahn (44) entlang der mindestens einen Schweißstation (45, 46, 47, 104) wenigstens annähernd in Vertikalrichtung führbar ist und/oder dass die Schweißstation als Ultraschall-Schweißstation ausgebildet ist.

12. Vorrichtung gemäß Anspruch 11, **dadurch gekennzeichnet, dass** die Schweißstation (45, 46, 47, 104) Schweißbacken (60a, ...), insbesondere Ultraschallsonotroden aufweist, die derart angeordnet sind, dass sie in einer wenigstens annähernd horizontalen Ebene bewegbar sind, insbesondere angetrieben von einem motorischen Antrieb (62a-f, 71 a-c), etwa einem hydraulischem oder pneumatischen Antrieb.

13. Vorrichtung gemäß einem oder mehreren der vorhergehenden Ansprüche 11-12, **dadurch gekennzeichnet, dass** mindestens zwei, vorzugsweise drei und/oder sämtliche Schweißstationen (45, 46, 47, 104) in einer gemeinsamen vertikalen Ebene in Folienbahnförderrichtung stromab aufeinanderfolgend, vorzugsweise untereinander, angeordnet sind.

14. Vorrichtung gemäß einem oder mehreren der vorhergehenden Ansprüche 11-13, **dadurch gekennzeichnet, dass** mindestens eine Schweißstation (45, 56, 47, 104) über mehrere, stromab aufeinanderfolgende, insbesondere in einer Vertikalebene untereinander angeordnete Schweißaggregate (45a, ...) mit jeweils mindestens einer Schweißbacke (60a, ...), insbesondere Ultraschallsonotrode verfügt, wobei die Schweißaggregate (45a, ...) der Schweißstation an einem gemeinsamen Rahmen (63, 69) oder Rahmengestell, vorzugsweise an einem geschlossenen Rahmen/Rahmengestell, angeordnet sind.

15. Vorrichtung gemäß einem oder mehreren der vorhergehenden Ansprüche 11-14, **dadurch gekennzeichnet, dass** mindestens eine Schweißstation (45, 46, 47, 104) über mehrere, insbesondere in der Vertikalebene untereinander angeordnete Schweißaggregatepaare (45a, ...) mit jeweils mindestens einer Schweißbacke (60a, ...) verfügt, wobei die Schweißaggregate (45a, ...) eines Schweißaggregatepaares (45a, 45d; 45b, 45e; ...) bezogen auf die Förderbewegung der Folienbahn (44) an einer gemeinsamen Förderposition und in Bezug auf eine Mittelebene zwischen den Schweißaggregaten (45a, ...) aneinander gegenüberliegend positioniert sind, insbesondere in einer gemeinsamen horizontalen Ebene.
